# EUROPEAN PATENT APPLICATION

(11) **EP 4 365 246 A1**
(43) Date of publication of application: **08.05.2024**
(21) Application number: 24156986.2
(22) Date of filing: 20.03.2020
(51) Int. Cl.: C09D 5/14, C09D 5/16, A47C 31/00, A47B 13/08, A47B 13/02, C09D 5/00

(54) **ANTIMICROBIAL FURNITURE COATING**

(30) Priority: 22.03.2019 FI 20195213
(62) Divisional of application: 20777480.3
(71) Applicant: Isku Interior Oy, 15210 Lahti (FI)
(72) Inventor: SOLJAMO, Kari, 00840 Helsinki (FI)
(74) Representative: Berggren Oy

(57) **Abstract**

An antimicrobial furniture coating, which includes an antimicrobial paint surface whose antimicrobial activity, when tested according to standards ISO 22196 or JIS Z 2801, eliminates at least 95% of bacteria used in the test, said paint surface comprising one or more paint or lacquer layers, the paint surface, when dry, has a total thickness of 10-150 µm, preferably 30-100 µm, at least the topmost lacquer or paint layer contains silver (Ag) and the amount of silver is 0,001-0,6% by weight, preferably 0,003-0,3% by weight, calculated from the coating's dry weight, and the paint surface has the silver in a substantially homogeneously distributed form, and the coating has been produced by applying a paint surface (310a, 61) onto the furniture surface.

## Description

The invention relates to an antimicrobial furniture coating. The coating has been provided with antimicrobial activity at least against *S.aureus* and *E.coli.*

The treatment of furniture/fixtures i.a. with a mold inhibitor is known per se, as is also enabling a resin used in plastic fixtures to become antimicrobial for example by adding silver compounds into the resin at manufacturing stage. Such treatments involve a problem, however, both in terms of costs demanded for the antimicrobial treatment required thereby and in terms of ensuring a given antimicrobial treatment efficiency. The latter problem is particularly notable as a result of today's heightened hygiene standards e.g. in hospitals, in several public facilities, e.g. schools, as well as in the reception areas of health clinics.

Available are also paints which comprise silver or silver compounds, but problems involved in the use thereof include i.a. high contents of silver compounds employed therein and the paint coating's inconsistent silver content, i.e. areas that are non-homogeneous in terms of silver compounds, whereby the coating is left with spots having no silver at all or its content too low in view of generating antimicrobial activity.

It is an objective of the present invention to eliminate or at least to alleviate problems occurring in the foregoing prior art.

Accordingly, it is a principal objective of the invention to introduce a procedure lower than before in terms of costs for providing an antimicrobial coating, and a procedure for treating a piece of furniture with silver compounds to make it antimicrobial, and a piece of furniture thus treated.

Another objective of the invention is to provide a way of treating a piece of furniture so as to always generate a specific bacterial growth and multiplication reducing activity in a space in which it has been installed, as compared to a corresponding untreated piece of furniture.

It is by means of an antimicrobial furniture coating of the invention that the foregoing objectives are attained.

Hence, the invention relates to an antimicrobial furniture coating as set forth in claim 1.

More specifically, the invention relates to an antimicrobial furniture coating, having an antimicrobial paint surface whose antimicrobial activity, tested according to standards ISO 22196 or JIS Z 2801, eliminates at least 95% of bacteria used in the test, said paint surface comprising one or more paint or lacquer layers, the paint surface, when dry, having a total thickness of 10-150 µm, preferably 30-100 µm, at least the topmost lacquer and paint layers containing silver (Ag), and the amount of silver is 0,001-0,6% by weight, preferably 0,003-0,3% by weight, calculated from the coating's dry weight, and the paint surface having silver distributed in a substantially homogeneous manner. The coating has been produced by applying a paint surface onto the furniture surface.

The invention relates also to a method for producing an antimicrobial furniture coating, said coating having an antimicrobial paint surface which comprises one or more paint or lacquer layers. The method comprises admixing silver (Ag) into paint or lacquer and applying one or more layers of paint or lacquer onto the surface of a piece of furniture. In addition, the method comprises admixing silver into paint or lacquer in situ, i.e. a moment before application such that, after the mixing and application, the paint surface has at least its topmost lacquer or paint layer containing silver, and the amount of silver is 0,001-0,6% by weight, preferably 0,003-0,3% by weight, calculated from the coating's dry weight.

In one embodiment, when a coating of the invention has been provided on the surface of a piece of furniture, the antimicrobial coating is provided on at least one selected contact surface of the piece of furniture.

The contact surface refers in this disclosure to a part of the furniture surface with a high probability of being touched by the user as he/she uses the piece of furniture.

The piece of furniture can be for example a table, a chair, desk, sofa or some other seat, or a piece of furniture comprising a tabletop. The piece of furniture may also be for example a cabinet or shelf.

The coating according to the invention can also be utilized for providing a furniture component, whereby the furniture component, such as a sofa leg, is an antimicrobial furniture component which, when connected to another or several furniture components, makes up an antimicrobial piece of furniture.

Two or more pieces of furniture obtained by means of the invention can also be used together, thereby making up an antimicrobial fixture assembly/furniture assembly. The furniture assembly refers in this case to a set of furniture, comprising two or more pieces of furniture intended or adapted for collective use.

The concept "pieces of furniture are intended or adapted for collective use" refers to a set of furniture, wherein the user is able to use simultaneously at least two pieces of furniture or is positioned at least next to a second piece of furniture while using the first piece of furniture. For example, the user is sitting on a chair placed next to a desk.

By means of the antimicrobial fixture assembly can be provided a way of treating furniture so as to always generate thereby at least a specific bacterial growth and multiplication reducing activity in a space in which it has been installed, as compared to corresponding untreated furniture.

The concept antimicrobial coating is used here in reference to a plastic, paint or composite coating, which has been tested according to ISO 22196 or JIS Z 2801 and which eliminates at least 95% of bacteria used in the test and coming into contact with such a coating.

The antimicrobial fixture assembly may in one case refer to a fixture assembly, which is set up in a single space and which comprises at least both of the following pieces of furniture adapted for collective use:
- a table with a wooden tabletop, said tabletop comprising an upturned topside of the tabletop and a downward-directed underside of the tabletop,

whereby the wooden tabletop has its topside provided with a coating selected from a group, including
a paint surface and
a wood veneer overlay;
and the wooden tabletop has its underside provided with a coating selected from a group, including
a paint surface and
a wood veneer overlay;
and the wooden tabletop has at least one of its vertical edges provided with a paint coating and the wooden tabletop has its underside adjoined by
either a wooden leg post or a metal leg post with a paint coating or
several wooden leg posts or several metal leg posts with a paint surface; as well as
a chair with a wood-framed seat panel whose topside is provided with a coating selected from a group, including:
   a wood veneer overlay and
   a paint surface;
   and whereby said wood-framed seat panel is adjoined by a wood-surfaced backrest directed upward from the seat panel and provided with a coating selected from a group, including:
      a wood veneer overlay and
      a paint surface;
      and said wood-framed seat panel is further adjoined by one or more downward-directed chair legs coupled underneath the seat panel, which is/are either wooden chair legs that is/are provided with a wood paint coating or metal chair legs that is/are provided with a powder paint coating;
      whereby both of the aforesaid pieces of furniture have coatings of the selected contact surfaces thereof provided with antimicrobial activity at least against *S.aureus* and *E.coli.* In this embodiment, the coatings of selected contact surfaces, which are provided with antimicrobial activity at least against *S.aureus* and *E.coli,* include:
         A) the contact surfaces of a table, comprising a topside of the tabletop as well as vertical edges of the tabletop, whereby
         21) the topside coating of the wooden tabletop is a paint surface comprising one or more lacquer or paint layers, said paint surface, when dry, having a thickness of 10-120 µm, preferably 30-100 µm, and its topmost lacquer or paint layer containing silver (Ag) 0,001-0,6% by weight, preferably 0,003-0,3% by weight, calculated from the topmost lacquer or paint layer's dry weight, or
         a wood veneer overlay, on top of which is a paint surface with one or more paint or lacquer layers, said paint surface, when dry, having a thickness of 10-120 µm, preferably 30-100 µm, and containing silver (Ag) 0,001-0,6% by weight, preferably 0,003-0,3% by weight, calculated from the coating's dry weight, or
         A22) the coating of at least one vertical edge of said tabletop is
         a paint surface comprising one or more lacquer or paint layers, said paint surface, when dry, having a thickness of 10-120 µm, whereby its topmost lacquer or paint layer contains silver (Ag) and the amount of silver is 0,001-0,6% by weight, preferably 0,003-0,3% by weight, calculated from the paint surface's dry weight; and
         (B) the contact surfaces of a chair comprise at least a topside and a backrest of the seat panel, whereby
         (B1) the topside coating of the seat panel is
         a wood veneer overlay, on top of which is a paint surface with one or more paint layers or lacquer layers, said paint layer, when dry, having a thickness of 10-120 µm, preferably 30-100 µm, and its topmost paint or lacquer layer containing silver (Ag), and the amount of silver is 0,001-0,6% by weight, preferably 0,001-0,3% by weight, calculated from the paint surface's dry weight, or
         a paint surface with one or more paint layers or lacquer layers, said paint layer, when dry, having a thickness of 10-120 µm, preferably 30-100 µm, and its topmost paint or lacquer layer containing silver (Ag), and the amount of silver is 0,001-0,6% by weight, preferably 0,001-0,3% by weight, calculated from the coating's dry weight, and
         (B2) the coating included in the backrest of a chair's back support has been treated antimicrobially as follows:
            on top of the wood veneer overlay is a paint surface with one or more paint or lacquer layers, said paint surface having a total thickness of 10-120 µm, preferably 30-100 µm, and at least one of its lacquer or paint layers contains silver (Ag) and the amount of silver is 0,001-0,6% by weight, preferably 0,003-0,3% by weight, calculated from the paint surface's dry weight, or
            a paint surface; which comprises one or more lacquer or paint layers, said paint layer, when dry, having a thickness of 10-120 µm and its topmost lacquer or paint layer containing silver (Ag), and the amount of silver is 0,001-0,6% by weight, preferably 0,003-0,3% by weight, calculated from the paint surface's dry weight.

In addition, by means of the invention there can also be provided an antimicrobial fixture assembly set up in a single space and comprising at least both of the following pieces of furniture (1 and 2), i.e. (1) a desk and (2) a chair, adapted for collective use:
1) The desk, such as a reception desk, including
   a plate-like worktop, made predominantly from wood material, which comprises an upturned cover of the worktop and an underside of the worktop, said underside having directly connected thereto a stand directed downward from the desk's worktop and made from a wood material,
   said worktop having its cover-side surface provided with a coating selected from a group, including:
      a paint surface or
      a wood veneer overlay,
      and said worktop having at least one of its vertical edges provided with a paint coating,
      said worktop having its underside adjoined by a base made preferably from a wood material and comprising a wooden surface coated with a plastic laminate or plastic film,
2) the chair with a wood-framed seat panel whose topside is provided with a coating selected from a group, including:
   a wood veneer overlay and
   a paint surface;
   and said wood-framed seat panel being adjoined by a wood-surfaced backrest directed upward from the seat panel and provided with a coating selected from a group, including:
      a wood veneer overlay and
      a paint surface;
      and said wood-framed seat panel is further adjoined by one or more downward-directed chair legs coupled underneath the seat panel, which is/are either wooden chair legs that is/are provided with a wood paint coating or metal chair legs that is/are provided with a powder paint coating;
      whereby both of the aforesaid pieces of furniture have coatings of the selected contact surfaces thereof provided with antimicrobial activity at least against *S.aureus* and *E.coli.*

In some embodiments of the present invention, the selected contact surfaces of furniture are provided with an antimicrobial coating, whereby the coatings of selected contact surfaces, which are provided with antimicrobial activity at least against *S.aureus* and *E.coli,* include:
1) the contact surfaces of a desk, comprising a cover for the desk's worktop as well as vertical edges of the worktop, whereby the topside coating of the worktop's cover is
   a paint surface comprising one or more lacquer or paint layers, said paint surface, when dry, having a thickness of 10-120 µm and its topmost lacquer or paint layer containing silver (Ag), and the amount of silver is 0,001-0,6% by weight, preferably 0,003-0,3% by weight, calculated from the paint coating's dry weight; or
   a wood veneer overlay, on top of which is a paint surface with one or more paint or lacquer layers, said paint surface, when dry, having a thickness of 10-120 µm, preferably 30-100 µm, and containing silver (Ag) 0,001-0,6% by weight, preferably 0,003-0,3% by weight, calculated from the paint surface's dry weight.
      and
   the coating on at least one vertical edge of said desk's vertical edges is
   a paint surface comprising one or more lacquer or paint layers, said paint surface, when dry, having a thickness of 10-120 µm and its topmost lacquer or paint layer containing silver (Ag), and the amount of silver is 0,001-0,6% by weight, preferably 0,003-0,3% by weight, calculated from the paint coating's dry weight; and
2) the contact surfaces of a chair comprise at least a topside and a backrest of the seat panel, whereby
   (B1) the coating on the seat panel's topside is
   a wood veneer overlay, on top of which is a paint surface, especially a lacquer coating, with one or more paint or lacquer layers, said paint surface, when dry, having a thickness of 10-120 µm, preferably 30-100 µm, and containing silver (Ag) 0,001-0,6% by weight, preferably 0,003-0,3% by weight, calculated from the paint surface's dry weight, or
   a paint surface; which comprises one or more lacquer or paint layers, said paint surface, when dry, having a thickness of 10-120 µm, preferably 30-100 µm, and its topmost lacquer or paint layer containing silver (Ag), and the amount of silver is 0,001-0,6% by weight, preferably 0,003-0,3% by weight, calculated from the dry weight of said silver-treated paint coating's topmost lacquer or paint layer, and
   (B2) the coating on the backrest of a chair's back support is
   a wood veneer overlay, on top of which is a paint surface such as a paint or lacquer layer which, when dry, has a thickness of 10-120 µm, preferably 30-100 µm, and has its topmost lacquer or paint layer containing silver (Ag), and the amount of silver is 0,001-0,6% by weight, preferably 0,003-0,3% b weight, calculated from the paint coating's dry weight, or
   a paint surface comprising one or more lacquer or paint layers, said paint surface, when dry, having a thickness of 10-120 µm, preferably 30-100 µm, and its topmost lacquer or paint layer contains silver (Ag) and the amount of silver is 0,001-0,6% by weight, preferably 0,003-0,3% by weight, calculated from the paint surface's dry weight.

In one embodiment, the paint surface according to the invention comprises at least two paint or lacquer layers, and only the topmost lacquer or paint layer is provided with silver by applying first at least one lacquer or paint layer and by applying thereafter on top of the at least one lacquer or paint layer the silver-containing topmost paint or lacquer layer.

The coating according to the invention can be produced by first applying on the surface a first layer of paint or lacquer, which is allowed to dry. The paint or lacquer can be a furniture paint or lacquer and be the same paint or lacquer that is used as a base paint or lacquer into which the silver is also admixed, or the first layer may comprise a different paint or lacquer into which the silver is admixed. Once the first layer has dried, on top of the same is applied at least a second layer of paint or lacquer. The coating may comprise at least two paint or lacquer layers so as to have silver contained in only some of the paint or lacquer layers, preferably in just the topmost layer. The coating may also comprise at least two paint or lacquer layers, both of said layers comprising silver. In this case, the topmost layer of paint or lacquer, and other possible silver-comprising paint or lacquer layers, comprise silver as described elsewhere in this disclosure and preferably mixed in situ.

When it is only the topmost lacquer or paint layer which comprises silver, it is possible to establish an antimicrobial coating for furniture by using less silver than in the prior art solutions.

In one preferred embodiment, the paint or lacquer is mixed in situ, whereby the silver-comprising paint or lacquer is mixed before producing a coating. The mixing may take place in such a way that there is hardly any time for the silver to settle in the paint or lacquer, the silver content being thus substantially homogeneous. The in situ mixing may take place close to a point in time at which the coating is for example painted. "Close to a point in time" can be for example a moment just before painting (for example before spraying), for example not more than 30 minutes before painting, preferably not more than about 10 minutes before painting, especially preferably about 4-5 minutes before painting.

The in situ mixing may also denote that the mixing of paint or lacquer occurs within the same 24 hours during which the coating is painted. For example, the mixing can be performed not more than 12 hours before painting, whereby the mixing is also perceived to take place essentially a moment before painting.

The paint or lacquer being mixed in situ indicates also that, in the paint mixing process, the paint has silver or silver compounds added therein in situ, i.e. essentially a moment before painting. Thereby can be avoided the settling of silver onto the bottom of the paint in such a way that it would be difficult to enable its blending within the paint in view of obtaining a homogeneous silver content.

The point in time for in situ mixing may represent a moment of adding the silver or silver compounds into paint or lacquer. In one embodiment, the in situ mixing takes place within the same 24 hours as the mixing of other paint ingredients, for example binders.

The coating according to the invention can also be established by reusing a paint or lacquer into which the silver has been admixed in situ at an earlier point in time. Thus, in the earlier mixed paint or lacquer, the silver may be in a precipitated condition on the bottom, but by remixing the paint or lacquer in situ (in this case without adding silver or silver compounds) and by painting the paint surface, a coating according to the invention can be obtained.

It is preferably by in situ mixing that the silver is enabled to disperse in paint or lacquer in a homogeneous manner, whereby, once the paint of lacquer has been mixed and is ready for application, the paint of lacquer may contain silver 0,0005-0,05%by weight, preferably 0,002-0,03% by weight, calculated from the paint's or lacquer's wet weight, and the paint or lacquer has silver 10-200 µg/l, preferably 20-150 µg/l, in every liter.

in one embodiment, the paint surface comprises at least one paint layer, comprising silver in such a way that the silver is in a substantially homogeneously distributed condition in the discussed coating. Homogeneously distributed denotes here that the coating does not include spots which have substantially more silver than other spots. The silver can be in a substantially homogeneously distributed condition, such that the coating comprises silver 0,001 - 30 µg/cm², preferably 0,01 - 20 µg/cm², in any optional cm² area
It is by producing a coating of the invention by mixing the paint in situ that the silver can be enabled to spread homogeneously within the coating. The homogeneous silver content in a coating may indicate that silver is needed in a lesser amount than in the prior art solutions for generating antimicrobial activity. If the silver-comprising paint has been applied for establishing a coating in such a way that the coating contains silver in a non-homogeneously distributed manner, the paint of lacquer to be employed must possibly have a silver content which is higher than the silver content of a paint of lacquer used in the invention.

In one embodiment, a paint surface of the invention is obtained by using a paint whose dry matter content is 20-60% and which comprises a binder selected from a group of alkyd, PVA, copolymer, styrene acrylate or acrylate. Preferably, the employed material comprises a dispersion paint. The paint may comprise a filler (for example titanium dioxide, calcium carbonate, or talc), a pigment (for example titanium dioxide), adjuvants (for example dispersant, emulsifier, foam inhibitor, propellant, preservative, UV protection agent), and/or a solvent (such as solute, thinner, and/or cosolvent). Silver, preferably as a compound bonded to a carrier, is added and admixed into the paint in situ, i.e. essentially a moment before application as described elsewhere in this disclosure.

In one example there can be used a mixture of a base paint type A and water, the former comprising about 40-50% dry matters, said mixture comprising about 90-99% paint and about 1-10% water (% by weight, calculated from the paint's wet weight). In the in situ mixing, into the mixture can be added about 0,1%, preferably 0,5-0,7%, for example about 0,65%, of an aqueous dispersion (percentages presented as percent by weight calculated from the paint's wet weight) which comprises about 1-3% of the reaction mass of silver chloride and titanium oxide. The silver-comprising paint can be applied onto a furniture surface preferably about 4-5 minutes after the mixing. In some embodiments, onto the surface may have been first applied at least one layer of paint or lacquer which has no silver. Once this layer/these layers have dried, at least one layer of the silver-comprising paint can be applied onto the surface. In another example, onto a furniture surface is applied only two layers of a silver-comprising paint. The paint can be preferably applied onto the surface at about 100 g/m² per each layer. The exemplified paint can be preferably applied onto the surface by spraying.

In one embodiment, a paint surface of the invention is obtained by using a lacquer whose dry matter content is 20-40% and which comprises a binder selected from a group of acrylate and alkyd.

In one embodiment, a paint surface of the invention is obtained by using a lacquer, comprising an aqueous dispersion which comprises a water-based transparent lacquer with a dry matter content of about 20-40% and silver. In one example, into the lacquer can be admixed in situ about 0,1-1%, preferably 0,5-0,7%, for example about 0,65%, of the aqueous dispersion (percentages percentages presented as percent by weight calculated from the lacquer's wet weight) which comprises about 1-3% of the reaction mass of silver chloride and titanium oxide. The lacquer can be applied onto the furniture surface for example by spraying in such a way that a single layer comprises about 80 g/m² of lacquer.

It is also possible to produce a coating of the invention by using an oil-based paint or lacquer, such as a catalyst paint.

In metal coatings, the employed test protocol was a so-called three-step "residual self-sanitizing" test protocol determined by EPA (US Environmental Protection Agency) for copper coatings and conducted in compliance with good laboratory practice (GLP). In the test protocol, the activity of a copper coating is examined against pathogens as follows: *E.coli O157, S.aureus,* vancomycin-resistant *E. faecalis* (VRE), *E*. *aerogenes* and *P. aeruginosa.* In this disclosure, the metal coating (copper alloy or brass) was considered antimicrobial provided that it fulfilled the aforesaid EPA's test protocol standards (cf. EPA test and registration/Antimicrobial Copper site).

The present invention is first of all generally based on a feature that the furniture coating is provided with antimicrobial activity by treating with silver compounds so as to obtain a coating which fulfills the requirements of the aforesaid ISO 22196 or JIS Z 2801 antimicrobial test. Secondly, the amount of silver added into the coating can be maintained modest by supplementing only the coating's surface layers with silver compounds (only about 0,001-0,6% by weight of a section of contact surface intimately adjoining the surface). Thirdly, the very small amount of silver compounds notwithstanding, the added silver compounds' effectiveness has been ensured by using silver compounds preferably bonded to a carrier. By these procedures there is attained the benefit of the contact surfaces of furniture being only supplemented with just such an amount of silver compounds which enables assurance of antimicrobial activity required by the high hygiene standards of e.g. hospitals and health clinics, yet enables maintenance of low costs for the silver treatment.

Preferably, the furniture coating is supplemented with silver compounds in such an amount and in such a form that the silver compounds' antimicrobial activity against certain pathogenic bacteria complies with the antimicrobial activity against selected pathogens as determined by ISO 22196 or JIS Z 2801. The selected pathogens include at least *S.aureus* and *E.coli.* According to the aforesaid test protocol, the active agent must have a sufficiently high antimicrobial effectiveness to kill 95% of the selected pathogens from a given antimicrobially treated surface as compared with an untreated surface.

The possible contact surfaces in a table and a desk (e.g. a reception desk) include the tabletop and a top surface of the worktop, as well as the vertical edges bounded by the table's tabletop and the desk's worktop. Depending on how a table is used, it is also often that the table legs have/table leg has been treated to render the same antimicrobial. It is only in a few applications (e.g. hospital environment) that the tabletop has its underside or a part thereof rendered antimicrobial. Not only the top surface and vertical edges of a desk's worktop but also the coating of a desk's pedestal can be rendered entirely or partially antimicrobial.

In chairs, on the other hand, it is at least the seat panel and the backrest, as well as the vertical edges thereof, which are rendered antimicrobial. Depending on intended use and the position of chair legs relative to the seat panel, the chair legs can also be treated to become antimicrobial.

In another preferred embodiment of the invention, the desk, table or chair has its selected contact surface coated with a wood paint coating, comprising one or more lacquer or paint layers, said paint surface having a thickness of 10-120 µm, preferably 30-100 µm, and only the topmost lacquer or paint layer containing silver (Ag), and the amount of silver is 0,001-0,6% by weight, preferably 0,003-0,3% by weight, calculated from the paint surface's dry weight. Thereby is provided a cost-effective way of treating wooden surfaces with a silver-containing paint.

The bonded-to-carrier silver compound consists in one embodiment of silver phosphate glass with a silver content of 0,1-10 mol%, preferably 0,5-5 mol%, even more preferably 0,5-2 mol%.

In another preferred embodiment of the invention, the polymer rim of a table or desk is rendered antimicrobial by adding, in the casting step of polymer molding, into the polyurethane resin an appropriate amount of a bonded-to-carrier silver compound. The polymer rim manufactured from polymer casting has a thickness of 1-5 mm and contains silver 0,001-0,6% by weight, preferably 0,003-0,3% by weight, calculated from the weight of a polyurethane resin used for casting said polymer rim.

In yet another preferred embodiment of the invention, the polymer rim of a table or desk is a rim strip, which is rendered antimicrobial by supplementing the rim strip-forming polyurethane resin or acrylonitrile butadiene styrene resin, in the rim strip manufacturing step, with a silver compound in such an amount that the rim strip, having a thickness of 0,5-4 mm, contains silver 0,001-0,6% by weight, preferably 0,003-0,3% by weight, calculated from the weight of resin used for manufacturing the rim strip.

In another preferred embodiment of the invention, the antimicrobial fixture assembly comprises a table whose tabletop is constructed from brass or a copper-containing alloy with at least 60% copper. The employed metal coating is required to satisfy the aforesaid EPA test protocol standards against pathogens mentioned therein.

Likewise, in another preferred embodiment of the invention, the contact surface is a wooden surface, such as a veneer surface, which is topped by a paint surface. The paint surface comprises one or more lacquer or paint layers, said paint surface having a thickness of 10-120 µm, preferably 30-100 µm, and only its topmost lacquer or paint layer contains silver (Ag), and the amount of silver is 0,001-0,6% by weight, preferably 0,003-0,3% by weight, calculated from the paint surface's dry weight. The amount of silver is also roughly speaking 0,001-0,6% by weight of the dry matter content of a paint or lacquer used for producing the topmost lacquer or paint layer.

In one embodiment of the invention, it is into the paint coating of furniture or into the paint coating on top of a wood veneer overlay, that the silver has been added in bonded form directly or indirectly bonded into a carrier compound, such as into phosphate glass, titanium dioxide, or zeolite.

In another embodiment of the invention, the piece of furniture is a table and the table's contact surfaces comprise an antimicrobial coating, whereby the contact surfaces comprise at least metal table legs adjoining the underside and outer edges of the tabletop, on top of said metal table legs being a powder paint surface which comprises a powder paint layer, which has a wet thickness of 10-150 µm, preferably 30-100 µm, and which layer contains silver (Ag) 0,001-0,6% by weight, preferably 0,003-0,3% by weight, calculated from the powder paint coating's dry weight.

In yet another embodiment, the piece of furniture is a table, comprising a tabletop manufactured predominantly from a wood material, said tabletop having its top and bottom surfaces provided with an adhesive plastic film or backing paper whose topmost layer comprises paper impregnated with polyester, melamine, urea or phenol resin into which is added bonded-to-carrier silver 0,001-0,6% by weight, calculated from the weight of polyester, melamine, urea or phenol resin added into the decorative paper.

In one embodiment, the piece of furniture is a chair and the chair has its wooden seat panel upholstered with a fabric and into the fabric is added bonded-to-carrier, organofunctional silanes, elemental silver or isothiazolidine.

In one such embodiment, in which the piece of furniture according to the invention is a chair and the contact surfaces comprise an antimicrobial coating, the chair's contact surfaces include a metal chair leg connected with an underside of the office chair's seat panel and being coated with a powder paint coating consisting of a powder paint layer and having a dry thickness of 30-60 µm and containing silver (Ag) 0,001-0,6% by weight, preferably 0,003-0,3% by weight, calculated from the powder paint layer's dry weight. In another embodiment of the invention, in which the piece of furniture is a chair, the chair's contact surfaces include metal chair legs, which are connected with an underside of the chair's seat panel or with edges of the seat panel, and on top of each of which is a powder paint surface consisting of a powder paint layer and having a dry thickness of 30-60 µm and containing silver (Ag) 0,001-0,6% by weight, preferably 0,003-0,3% by weight, calculated from the powder paint layer's dry weight.

In one embodiment, the piece of furniture of the invention is a chair or an office chair and the chair's or office chair's contact surfaces include surfaces of armrests coupled with the chair's legs and/or backrest, the topside and/or side surfaces of said armrests being provided with a coating selected from a group, including:
a wood veneer overlay, on top of which is a paint surface made up of at least one paint or lacquer layer having a thickness of 10-120 µm, preferably 30-100 µm, and its topmost layer containing silver (Ag), and the amount of silver is 0,001-0,6% by weight, preferably 0,003-0,3% by weight, calculated from the paint surface's dry weight, or
a paint surface, which consists of at least one paint or lacquer layer having a thickness of 10-120 µm, preferably 30-100 µm, and containing silver (Ag) 0,001-0,6% by weight, preferably 0,003-0,3% by weight, of the paint coating's dry weight, said silver being predominantly present in the paint coating's topmost paint or lacquer layer.

In one embodiment, the piece of furniture is a chair whose contact surfaces comprise an antimicrobial coating, whereby at least the chair's armrests comprise contact surfaces and a topside and/or side surfaces of the armrests are provided with a coating which is a plastic laminate layer, comprising predominantly polyester or melamine resin.

One piece of furniture according to the invention is a chair whose contact surfaces comprise an antimicrobial coating, whereby at least the chair's armrests comprise contact surfaces and vertical ends of the armrests have a paint surface consisting of at least one paint or lacquer layer having a thickness of 10-120 µm, preferably 30-100 µm, containing silver (Ag) 0,001-0,6% by weight, preferably 0,003-0,3% by weight, calculated from the topmost paint surface's dry weight, and said silver being predominantly present in the topmost paint or lacquer layer.

It is possible in various embodiments for the piece of furniture according to the invention to comprise a metal coating of copper, the metal coating's copper consisting of semihard copper, for example C12200, or the metal coating's brass consisting for example of grade C23000.

In the examples described in this disclosure, the paint surface comprises silver predominantly only in the topmost lacquer or paint layer, but by means of a coating of the invention there can also be established an antimicrobial furniture coating for example with two layers of paint or lacquer, both of which comprise silver. The antimicrobial furniture coating of the invention may also comprise for example three layers, of which it is predominantly just one or two topmost paint or lacquer layers which comprise silver.

In the described examples, the coating comprises silver 0,001-0,6% by weight, and preferably for example 0,003-0,3% by weight, of the coating's dry weight. If the coating comprises for example two layers of paint or lacquer, and mostly just in the topmost paint or lacquer layer, the coating may in this case comprise silver for example 0,001-0,3% by weight, preferably 0,001-0015% by weight, calculated from the coating's dry weight.

The invention will now be elucidated even further with reference to the accompanying figures.
Figs. 1A and 1B each displays, in a perspective view, a multi-legged table and two slightly different sets of customer chairs on the opposite sides of this table's tabletop.
Fig. 2A shows, in a perspective view, an electric table equipped with adjustable legs and a set of customer chairs as well as an office chair around the same.
Fig. 2B further illustrates, in a diagonal overhead view, the electric table of fig. 2A by itself.
Fig. 2C shows, on the other hand, in a diagonal overhead view, the office chair of fig. 2A.
Fig. 3 shows, in a diagonal overhead view, a set of furniture, including a leg post-equipped table and four customer chairs around the same.
Fig. 4A shows a pair of customer chairs, which can be used in the sets of furniture presented in figs. 1A, 1B or 2A to replace the sets of customer chairs shown therein.
Figs. 4B and 4C show various customer chairs which can be used in the sets of customer chairs presented in figs. 1A, 1B and 2A.
Figs. 5A and 5B each shows office premises with several furniture pieces of the invention set up therein.
Fig. 6 shows a reception desk and office chairs used in association therewith.
Figs. 7A-7G show schematically various contact surfaces provided with antimicrobial treatments.
Fig. 8 displays steps in a method of the invention.

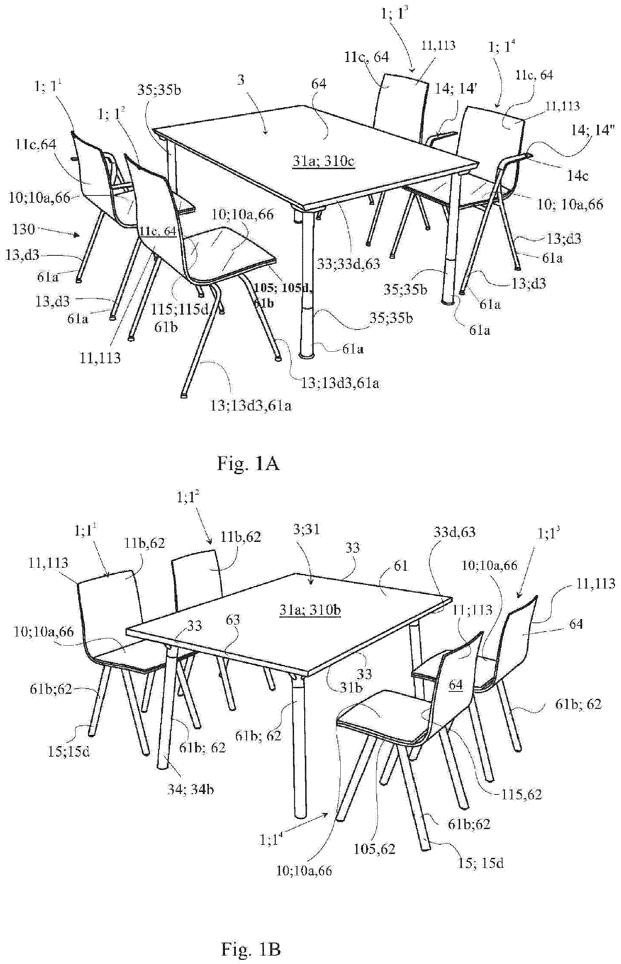

Hereinafter will be reviewed the structures depicted in figs. 1-8, and which aspect of the invention is intended to be illustrated with each figure.

Fig. 1A reveals, in a perspective view, an antimicrobial fixture assembly, which is set up in one single office space. Fig. 1A shows a table 3 and four customer chairs 1; 1¹-1⁴ around the same, said set of customer chairs 1¹-1⁴ being adapted for use jointly with said table 3. The set of customer chairs includes two groups of customer chairs on the opposite sides of the table. The first group of customer chairs consists of customer chairs 1; 1¹ and 1; 1² and the second group of customer chairs consists of customer chairs 1; 1³ and 1; 1⁴, said groups of customer chairs being positioned on the opposite sides of a tabletop 31 of the table 3.

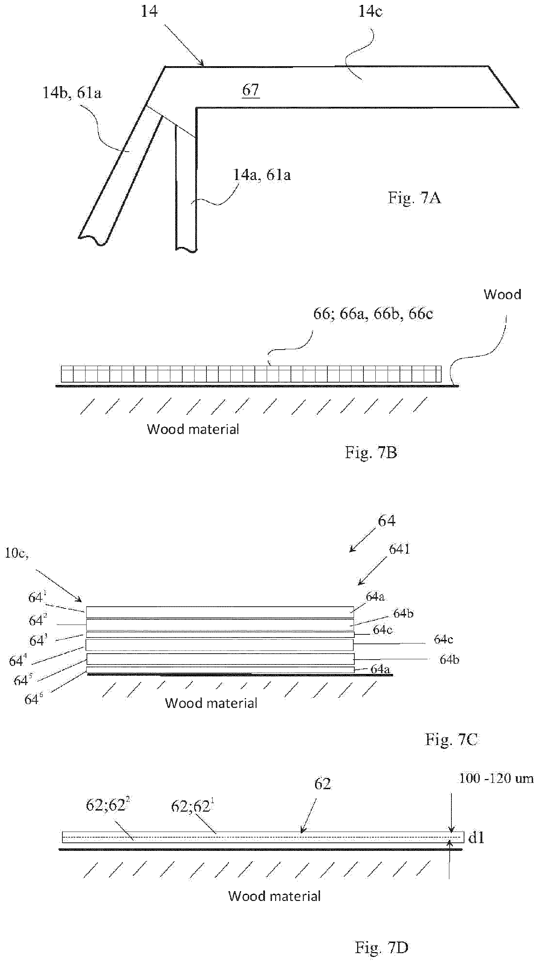

The table 3 includes a tabletop 31 manufactured from wood material, such as for example solid wood or furniture board. The tabletop 31 has its topside 31a coated with a melamine-based first plastic laminate 310c and its underside coated likewise with a melamine-based second plastic laminate or with mere backing paper. Each plastic laminate coating 310c has a total thickness of about 0,8 mm. It is only into the topside plastic laminate coating 310c of the tabletop 31 that an antimicrobial silver compound has been added in a manner similar to that illustrated in fig. 7C and its description for providing an antimicrobial plastic laminate coating 310c, 64.

In this case, a topmost surface film 64¹, 64a was completely excluded from the plastic laminate and was replaced by impregnating a topmost decorative paper 64², 64b (cf. fig. 7C) once or twice with melamine resin. The silver-containing silver phosphate glass contained silver 0,1-10 mol%. The employed silver phosphate glass had a general formula Ca₃₀Na₂₀₋ₓP₅₀Agₓ, wherein x=0,1-10, preferably x=0,5-5. Silver phosphate glass was preferably only incorporated in the resin batch used for the latter impregnation of decorative paper. Thereby, on top of the decorative paper could be formed a thin surface film, which contained silver compounds. Hence, after the treatment, the thin surface layer of the topmost decorative paper 64b (cf. fig. 7C) in the plastic laminate coating 310c of the tabletop 31 contained silver about 0,001-0,6% by weight calculated from the weight of a silver-treated resin batch that was added into the surface layer of decorative paper.

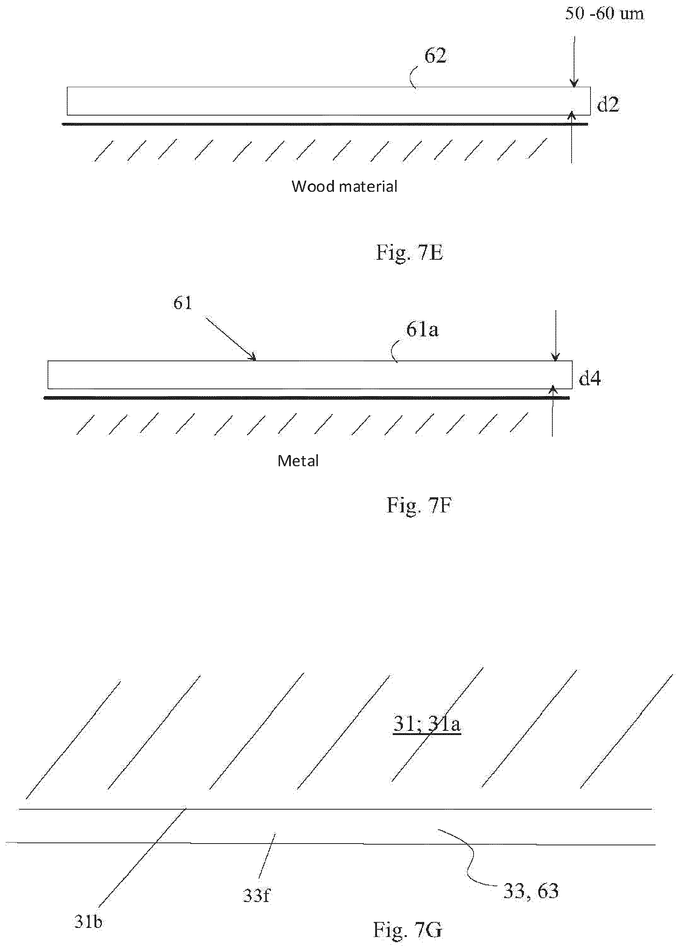

Between the top and underside plastic laminate coatings of the table's 3 tabletop 31 is left an end face (edge) area of the wooden tabletop 31 of the table 3, the vertical plane passing thereby being in transverse direction relative to the plane of a topside 31a of the tabletop 31. The tabletop 31, shown in fig. 1A, has a vertical edge 33 of its end face formed with an elongated polymer rim 33d, which is co-directional with the tabletop's top edge and makes up an antimicrobial polymer rim 33d, 63. The polymer rim 33d of the edge 33 can be either an edge molding 33f made of polyurethane or a rim strip 33e made of polyester or acrylonitrile butadiene styrene (cf. fig. 7G). The antimicrobial silver compound, such as the aforementioned silver phosphate glass with a general formula of Ca₃₀Na₂₀₋ₓP₅₀Agₓ, wherein x=0,1-10, specifically 0,5-5, is added into the polymer rim 33d forming polyurethane resin (edge molding) or polyester resin (rim strip) in the manufacturing process of said polymer rim 33d in a manner similar to that illustrated in connection with the description of fig. 7G.

The rectangular-shaped wooden tabletop 31, shown in fig. 1A, has connected with its underside, at the corners of the tabletop 31, a group of four metal table legs (edge legs) 35; 35b. Each edge leg 35b has an antimicrobial powder paint surface 61a. The powder paint surface 61a is established by spraying or otherwise applying powder paint onto each table leg 35; 35b for a uniform paint layer of about 100 µm, which contains a silver-containing antimicrobial compound bonded directly or indirectly to a carrier, such as titanium oxide-bonded silver chloride, silver zeolite, or silver phosphate glass. The silver phosphate glass, titanium dioxide or silver zeolite is alloyed into the powder pint in such an amount that the dry paint film contains silver as little as 0,001 - 0,6% by weight of the binder's dry weight.

The chairs 1 around the table 3 are all customer chairs, each including various antimicrobial coatings. As a rule, all outwardly exposed surfaces of the customer chairs are potential contact surfaces, thus having been treated to become coatings which comprise antimicrobial silver. Each chair 1; 1¹, 1; 1², 1; 1³, 1; 1⁴ comprises a wood-frame seat panel 10 whose topside is provided with an antimicrobial textile covering 10a, 66. Preferably, the antimicrobial textile covering 10a, 66 is a fabric upholstery, which has been treated with a microbicidal silver or isothiazolidine compound or an organofunctional silane. With regard to manufacturing the antimicrobial fabric upholstery 10, 66 for a seat panel, reference is made to fig. 7B as well as to the description of said figure.

The underside of a seat panel 10 is generally a painted wooden surface or the like, which has not been treated with an antimicrobial silver compound because the seat panel's underside is not generally regarded as a contact surface. In some applications, i.a. in hospital environment, the bottom surface of a chair's seat panel is nevertheless considered as a potential contact surface, whereby it is also treated to become antimicrobial in a manner similar to the topside of the seat panel.

From the seat panel 10 of each chair 1 rises a continuous back support 11, which is simultaneously a backrest 113. The upward extending back support 11 is wood framed and coated with a plastic laminate 11c on both sides. The plastic laminate coating 11c of the backrest/back support is treated for an antimicrobial plastic laminate coating 11c, 64 with a silver compound such as silver phosphate glass. Fabrication of the plastic laminate coating 11c, and its treatment for making it antimicrobial, have been described later in more detail in connection with fig. 7C. Films 64¹... 64⁶ (cf. fig. 7C) for the plastic laminate coatings 11 of the chairs 1; 1¹, 1; 1², 1; 1³, 1; 1⁴ shown in fig. 1A are all based on polyester resin.

Alternatively, the films 64¹... 64⁶ for a plastic laminate coating of the back support/backrest 11, 113 can be made by impregnating papers for the plastic laminate of the backrest/back support 11, 113 with melamine resin.

In these antimicrobial plastic laminate coatings, either a topmost decorative paper 64², 64b, the topmost decorative paper 4², 64b as well as a topmost surface film 64¹, 64a or all the films 64¹... 64⁶ had been impregnated with polyester resin (or melamine resin) at least once (cf. fig. 7C). Into the polyester resin had been added bonded-to-carrier silver compounds (silver phosphate glass, silver chloride when bonded to titanium dioxide, or silver bonded to zeolite) for providing an antimicrobial treatment. The amount of antimicrobial silver was in all treatments 0,001-0,6% by weight calculated from the total weight of resin contained in the films treated with silver compounds. In general, the silver treatment was only applied to the topmost resin layer impregnated into the decorative paper.

Both the seat panel 10 has its edges (rims) 105 and the back support 11 (or backrest 113) has its edges 115 treated to become antimicrobial for being perceived as contact surfaces in office chairs. It is most common that the wooden back support 11, or here also the backrest 113, has its rim provided with a wood paint coating 115d. Likewise, the seat panel 10 has its edges 105 provided with a wood paint coating 105d. The wood paint surface 105d of the edge 105 of the seat panel 10, as well as the wood paint surface 115d of the rim 115 of the back support 11, is preferably a lacquer coating which has been rendered antimicrobial by supplementing it with bonded-to-carrier silver 0,001-0,1% by weight calculated from the dry matter content of a binder contained in the wood paint coating. The antimicrobial paint surface is produced as described in detail in figs. 7D-7E. It is usual that the rims 105, 115 of a seat panel and/or a back support/backrest are treated 2-3 times with antimicrobial wood paint 105d, 115d, such as lacquer. Each paint layer, when wet, has a thickness of about 100 µm, whereby the dry paint film shall have a thickness of 10 -40 µm, depending on the amount of binder. Generally, it is only the topmost paint film which is supplemented with a bonded-to-carrier silver compound, the amount of silver being 0,001 -0,6% by weight of the paint surface's weight.

All four legs of each chair 1; 1¹, 1; 1², 1; 1³, 1; 1⁴ are metal legs 13 coated with a powder paint coating 13d; 13d3. The powder paint surface 13d3 of each metal leg 13 is formed as an antimicrobial powder paint coating 61a as described later in more detail in connection with the description of fig. 7F. The powder paint surface 61a is established by spraying or otherwise applying powder paint onto each chair leg 35; 35b for a uniform paint layer of about 100 µm, which contains some silver-containing antimicrobial bonded-to-carrier compound, such as zeolite-bonded silver, titanium dioxide-bonded silver chloride, or silver phosphate glass. Silver phosphate glass, silver chloride-comprising titanium dioxide, or silver-containing zeolite is alloyed into the powder paint in such an amount that the dry paint film contains silver 0,001-0,6% by weight of the paint film's dry weight, i.e. in practice, the powder paint should contain silver 0,001-0,1% by weight of the binder's dry weight.

The contact surfaces of chairs 1; 1¹ and 1; 1⁴ further include surfaces of armrests 14 coupled with the legs 13 and/or the back support 11 of these chairs. The armrests 14 have horizontal armrest components 14c thereof fabricated from a compression molded thermosetting plastic. Into the resin, used for compression molding, is in the manufacturing process added some microbicidal, bonded-to-carrier silver compound, especially silver phosphate glass, in such an amount that the compression molding of the armrest components 14c contains silver (Ag) 0,001-0,6% by weight calculated from the weight of a resin used for compression molding.

The armrest components 14c of a chair's armrests 14 may also have top and/or side surfaces thereof provided with a metal coating, which is fabricated from antimicrobial brass or a copper alloy which has more than 60% copper. Such a metal coating has antimicrobial activity at least against *S.aureus* and *E.coli* and is required to satisfy the standards of the aforementioned three-step EPA test protocol.

Fig. 1B shows, likewise in a perspective view, one other antimicrobial fixture assembly which is set up in one single office space. Also, fig. 1B shows a table 3 and four customer chairs 1; 1¹-1⁴ therearound, said plurality of customer chairs 1¹-1⁴ being adapted for use together with said table. The plurality of customer chairs includes two groups of customer chairs on the opposite sides of the table positioned on the opposite sides of a tabletop 31 of the table 3.

In this case as well, the table 3 includes a rectangular-shaped tabletop 31 fabricated for example from solid wood or furniture board.

The furniture board refers in this disclosure to a core material for the worktop of a tabletop or a desk, which may consist of chipboard, plywood, or fiberboard, specifically mdf board.

The tabletop 31 has its topside 31a, as well as its underside as well, provided with a wood veneer overlay 310b with a thickness of 0,5-4 mm, preferably 0,6-1,5 mm. The tabletop has the wood veneer overlay 310b of its topside provided with a paint or lacquer coating 61 whose total film thickness is 40-120 µm, depending on the amount of binder in the paint or lacquer coating as well as on the number of paint/lacquer layers (each paint or lacquer layer forms upon drying a film whose film thickness is 20-40 µm). Into the paint or lacquer coating has been added bonded-to-carrier silver, such that the amount of silver is 0,001-0,6% by weight, preferably 0,003-0,3% by weight, calculated from the paint or lacquer coating's dry weight. It is generally only the paint or lacquer layers of the wood veneer overlay 310b on the topside 31a of the tabletop 31 which are supplemented with an antimicrobial silver compound in a manner similar to that illustrated in figs. 7D-7E.

There are applications, however, in which the wood veneer overlay of a tabletop's underside is also provided with an antimicrobial paint or lacquer coating 61.

Between the laminate coatings on top and undersides of the tabletop 31 of the table 3 is left a vertical edge 33 of the tabletop 31, which is perpendicular to the plane of a topside 31a of the tabletop 31. The tabletop 31 may have its end face 33 formed with an elongated antimicrobial polymer rim 33d, 63, which is co-directional with a top edge 31b of the tabletop and which is similar to that already described earlier in connection with fig. 1A.

Instead of the polymer rim 33d, the tabletop 31 may have its vertical edge 33 also provided with a separate wooden strip in order to provide an edge strip (not shown in the figures). The edge strip can be thereafter provided with an antimicrobial wood paint coating, such as a lacquer coating. Treatment of the wood paint coating to make it antimicrobial can be conducted in a manner similar to that explained in connection with figs. 7D-7E and the description thereof.

The rectangular-shaped wooden tabletop 31 of a table 3, shown in fig. 1B, has connected with its underside, at the corners of the tabletop 31, a group of four wood-constructed table legs (edge legs) 34; 34b. Each edge leg 34b has an antimicrobial wood paint surface 61b. The treatment of a wood paint coating to render the same antimicrobial can be performed in a manner similar to that presented in connection with figs. 7D-7E and the description thereof. Thus, the antimicrobial wood paint surface 61b is established on the table leg 3; 34b by spraying or otherwise applying paint or lacquer onto each table leg 34; 34b for one or more uniform paint layers with a wet thickness of about 100 µm (dry thickness about 10-40 µm). The selected paint layers contain some silver-containing antimicrobial bonded-to-carrier compound such as zeolite, reaction mass of silver chloride and titanium dioxide, or silver phosphate glass. Silver phosphate glass, silver chloride/titanium dioxide, or zeolite is alloyed into the wood paint in such an amount that the paint surface, when dry, contains silver 0,001-0,6% by weight, preferably 0,003-0,3% by weight, of the dry weight.

Chairs 1; 1', 1; 1², 1; 1³, 1; 1⁴ around the tabletop 31 of the table 3 are all customer chairs, each with various antimicrobial coatings. As a rule, all outwardly exposed surfaces of the customer chairs are also here potential contact surfaces, having been treated to become surfaces comprising antimicrobial silver. Each chair 1; 1', 1; 1², 1; 1³, 1; 1⁴ comprises a wood-frame seat panel 10 having its topside provided with an antimicrobial textile covering 10a, 66. Preferably, the antimicrobial textile covering 10a, 66 is fabric upholstery and the fabric has been supplemented with bonded-to-carrier, organofunctional silanes, elemental silver, or isothiazolidine. In terms of manufacturing the antimicrobial fabric upholstery 10a, 66 for the seat panel, reference is made more specifically to fig. 7B as well as to the description of the figure.

The underside of the seat panel 10 is generally a painted wood surface or the like, which has not been treated with an antimicrobial silver compound since the seat panel's underside is generally perceived as a contact surface. As mentioned earlier, in some applications, e.g. in hospital environment, it is nevertheless possible that the seat panel 10 of the chair 1 has its underside also considered as a potential contact surface, whereby it will also be rendered antimicrobial e.g. by surface-treating the same with an antimicrobial wood paint coating 61b as described above.

From the seat panel 10 of each chair 1 rises upward a back support 11, which is simultaneously a backrest 113. The back support 11 is wood-framed and coated with an adhesive wood veneer overlay 11b on each side (chairs 1;1¹ and 1; 1²) or with an antimicrobial plastic laminate coating 64 on each side (chairs 1;1³ and 1; 1⁴). The wood veneer overlay 11b is further coated with an antimicrobial wood paint coating 61b, especially with an antimicrobial lacquer coating 62. The wood paint surface is rendered antimicrobial by treating with a silver compound such as silver phosphate glass as presented in more detail in figs. 7D-7E and in the description related thereto. The amount of microbicidal silver in all wood paint coatings was 0,001-0,6% by weight, preferably 0,003-0,3% by weight, calculated from the paint surface's dry weight. The plastic laminate coasting 64 for the backrests of chairs 1;1³ and 1; 1⁴ is manufactured and rendered antimicrobial in a manner similar to that presented in fig. 1A regarding plastic laminate coatings for the chairs 1; 1¹, 1; 1², 1; 1³, 1; 1⁴. Likewise in this case, the plastic laminate coating 64 may have all its films 64¹... 64⁶ based on either polyester resin or melamine resin as presented later in connection with fig. 7C and its description.

Both all edges (rims) 105 of the seat panel 10 and all edges 115 of the back support 11 are treated with antimicrobial furniture lacquer 62 the same way as in the working example presented in fig. 1A. These edges are regarded as contact surfaces in customer chairs.

All 4 legs of each chair 1; 1', 1; 1², 1; 1³, 1; 1⁴ are wooden legs 15 coated with a wood paint coating 15d. The wood paint surface 15d of each table leg is formed as an antimicrobial wood paint coating 61b as described later in more detail with reference to fig. 7F. The wood paint surface 61b is established by spraying or otherwise applying paint or lacquer onto each table leg 34; 34b for one or more uniform paint layers with a wet thickness of about 100 µm. Each paint layer forms, upon drying, a paint film of about 20-40 µm, depending on the amount of dry matter contained therein. At least the topmost paint film contains some silver-containing antimicrobial, bonded-to-carrier silver compound, such as zeolite-bonded silver, titanium oxide-bonded silver chloride, or silver phosphate glass. Silver phosphate glass, reaction mass of silver chloride and titanium dioxide, or silver-containing zeolite is alloyed into the wood paint in such an amount that the paint surface contains silver 0,001-0,6% by weight, preferably 0,003-0,3% by weight, of the paint surface's dry weight, i.e. in practice, the paint should contain silver 0,001-0,6% by weight of the binder's dry weight.

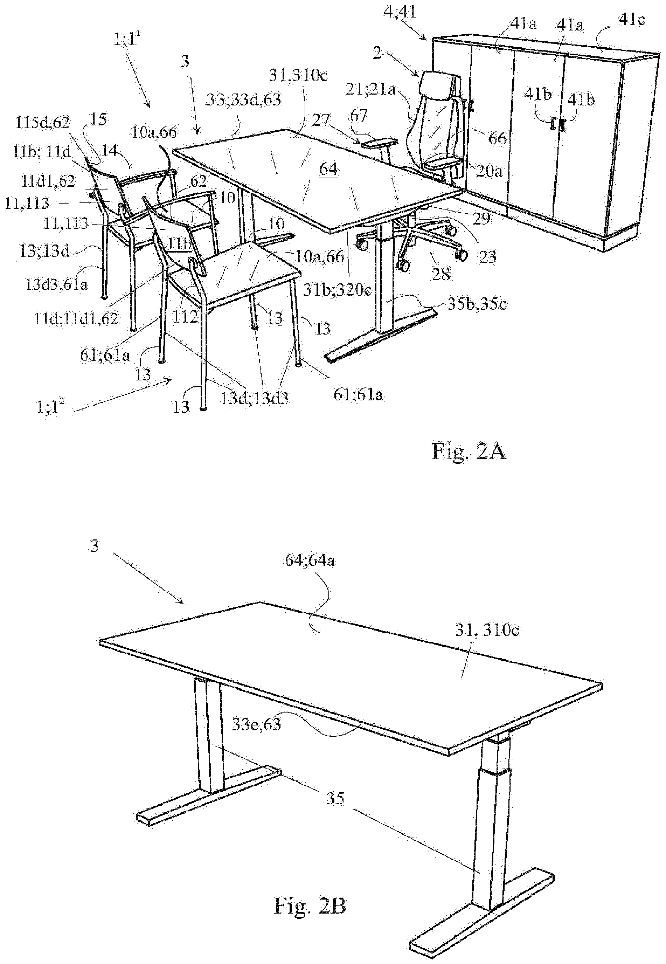

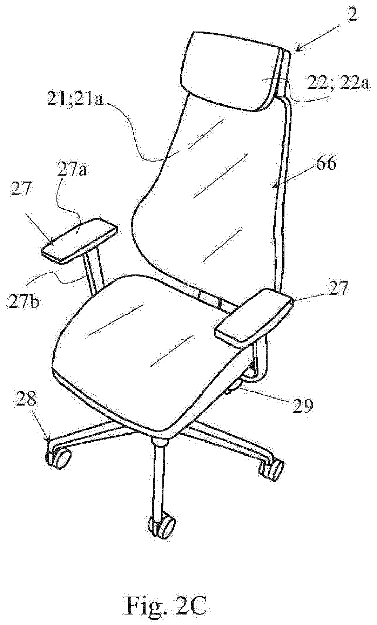

Fig. 2A shows, in a perspective view, a two-legged so-called electric table 3, and fig. 2A depicts two customer chairs 1, as well as one office chair 2, around the electric table 3. The electric table 3 of fig. 2A is for the sake of clarity further depicted by itself in fig. 2B, and the office chair 2 of fig. 2A is depicted by itself in fig. 2C. Hereinafter will be described details of the invention visible in these figures 2A, 2B and 2C.

The electric table 3 has its tabletop 31 made of furniture board having its top and undersides overlaid with a plastic laminate coating 310c (the underside can also be coated with mere backing paper). The electric table 3 has its topside 31a supplemented, during manufacturing process, with silver compounds in such an amount that the plastic laminate coating 31; 310c has been rendered antimicrobial. The electric table 3 does not have a plastic laminate coating 320c (or backing paper) of its underside 31b regarded as a contact surface, and so it is generally left untreated with antimicrobial silver compounds or the like. There are applications, however, in which the tabletop's underside may also be treated so as to become antimicrobial.

Manufacturing the topside plastic laminate coating 310c for the tabletop 31 of the electric table 3 and rendering said laminate coating antimicrobial were carried out in a manner similar to that presented in connection with the description of figs. 1A and 7C. To all vertical edges 33 of the tabletop 31 of the electric table 3 was added a polymer rim 33d, into which were added microbicidal silver compounds in such an amount that the polymer rim 33d was found to possess the antimicrobial activity determined in standards ISO 22196 and JIS Z 2801 against selected pathogenic bacteria. The antimicrobial polymer rim 33d, 63, containing silver compounds, was manufactured in a manner similar to that described in connection with the table depicted in fig. 1A. Fabrication of the actual polymer rim 33d and addition of silver compounds into the polymer rim are explained in more detail in fig. 7G and its description. With respect to manufacturing options of a plastic laminate coating 64 for the tabletop 31 of the table 3, as well as manufacturing the antimicrobial polymer rim 63, reference is indeed made to figs. 1A, 1B and 7C, 7G and the description thereof.

The electric table 3 has connected with its underside two height-adjustable, metal table legs 35; 35c, which have been treated with a powder paint. The adjustment mechanism-equipped legs 35c of the electric table 3 are not generally perceived as contact surfaces, which is why the powder paint coating present thereon has not been supplemented with microbicidal compounds.

The two chairs 1; 1¹, 1; 1² present on a first side of the electric table 3 are both customer chairs and both include various antimicrobial coatings. In principle, all outwardly exposed surfaces of these customer chairs 1; 1¹, 1; 1² are again potential contact surfaces, being thus provided with coatings comprising silver in possession of microbicidal activity. Each customer chair 1; 1¹, 1; 1² comprises a metal-frame seat panel 10 having its topside and side edges provided with an antimicrobial textile covering 10a, 66. Preferably, the antimicrobial textile covering 10a, 66 is fabric upholstery which has been treated with a microbicidal silver or isothiazolidine compound or organofunctional silane. With regard to manufacturing the antimicrobial fabric upholstery 10a, 66, reference is made more specifically to fig. 7B as well as to the description of this figure. The seat panel 10 has its underside usually powder painted and the powder paint surface has generally not been treated with an antimicrobial silver compound because the underside of the seat panel 10 is usually not regarded as a contact surface.

From the seat panel 10 of each customer chair 1; 1¹, 1; 1² rises upward a back support 11 including a metal support frame 112, said support frame 112 being provided with an upward extending wooden backrest 113. The plate-like backrest 113 is manufactured from wood material, such as a compression molding, thermoplastic plywood, or solid wood. The first customer chair 1; 1¹ has each side of its backrest 113 overlaid with a wood paint coating 11d such as an antimicrobial furniture lacquer 11d1, 62. The second customer chair 1; 1² has its backrest 113 coated with an adhesive wood veneer overlay 11b on each side. The wood veneer overlay 11b is further covered with a wood paint coating 11d, particularly with an antimicrobial furniture lacquer coating 11d1, 62, which includes 1-2 lacquer films, each lacquer film having a dry thickness of 20-40 µm.

The wood paint coating 11d has its topmost layer in either case treated with an antimicrobial silver compound, such as silver phosphate glass, as presented in detail in figs. 7D-7E and in the description related thereto. The amount of microbicidal silver in all wood paint coatings was 0,001-0,6% by weight, preferably 0,003-0,3% by weight, calculated from the weight of a binder in the paint surface.

The back support 11 has edges 115 (rims) of its backrest 113 provided with a wood paint coating 115d, especially with an antimicrobial furniture lacquer coating 115d, 62. Such a furniture lacquer coating 115, 62 for the edge 115 of a chair's back support 11 has 2-3 lacquer layers and only the topmost lacquer layer has been rendered antimicrobial by treatment the same way as described in the working example presented above in fig. 1A and in figs. 7D-7E, as well as in the description related to these figures. These backrest/back support's edges 115 are considered contact surfaces in office chairs. The backrest's edges/rims 115 are therefore treated 1-2 times with an antimicrobial wood paint such as lacquer and each paint layer has a wet thickness of about 100 µm, whereby the dry paint film shall have a thickness of 20-40 µm, and the topmost paint film has been supplemented with a bonded-to-carrier silver compound in such a way that the wood paint coating contains silver 0,001-0,6% by weight, preferably 0,003-0,3% by weight, of the dry weight.

The back support 11 has its upward-directed metal frame 112 overlaid with antimicrobial powder paint coating in a manner similar to that illustrated in fig. 7F for the table's 1 aluminum-constructed leg 13, which is coated with a microbicidal powder paint coating 61; 61a. The amount of microbicidal silver is 0,001-0,6% by weight calculated from the powder paint coating's 61a dry weight. In practice, the amount of an antimicrobial silver compound is generally calculated so as to comprise about 0,001-0,6% by weight of the dry weight of a binder that makes up the powder paint film

All 4 legs of both chairs 1; 1¹, 1; 1² are metal legs 13 overlaid with a powder paint coating 13d3. Each table leg has its powder paint surface 13d3 formed as an antimicrobial powder paint coating 61a as presented later in more detail in connection with the description of fig. 7F. The powder paint surface 61a is established by spraying or otherwise applying onto each table leg 13 a powder paint surface 13; 13d3, which comprises a uniform powder paint layer of about 100 µm. The powder paint develops, upon drying, an antimicrobial powder paint coating 13d3; 61a (powder paint film) of about 40-60 µm, which contains some silver-containing antimicrobial bonded-to-carrier compound, such as zeolite-bonded silver, titanium dioxide-bonded silver chloride, or silver phosphate glass. Silver phosphate glass, reaction mass of titanium dioxide and silver chloride, or silver-containing zeolite is alloyed into the powder paint in such an amount that the dry powder paint film 13d3; 61a contains silver 0,001-0,6% by weight, preferably 0,003-0,3% by weight, of the powder paint surface's weight.

On the other side of a customer table 3 visible in fig. 2A (opposite to the customer chairs 1) is positioned an office chair 2, which is also further shown by itself in fig. 2C. To the underside of a wood-frame seat panel 20 of the office chair is connected a plastic- or metal-constructed adjustment leg 22. In this example, the frame consists of wood, yet the frame may also be made of some other material such as polyurethane. The seat panel 20 has its topside and side edges covered with textile, said textile covering 20a having an antimicrobial treatment. The wood-frame seat panel 20 has associated therewith a back support 21, which is directed upward from the seat panel 20 and consists of a backrest 21. The backrest 21 is provided with a textile covering 21a, 66, which has an antimicrobial treatment. The textile covering 21a, 66 is fabric upholstery, which has been treated with a microbicidal silver or isothiazolidine compound or an organofunctional silane. The antimicrobial textile covering 66 is examined in more detail in connection with the description of fig. 7B to which reference is also made here. The backrest 21 associated with a wood-frame seat panel has its upper portion provided with a neck support 22, which is also upholstered all around with an antimicrobial textile covering 22a, 66 similar to that used for the backrest. The adjustment leg 22 of the office chair 2 is not categorized as a contact surface and, thus, has not been rendered antimicrobial, either.

The contact surfaces of the office chair 2 further include the topside of a support pad 27a included in armrests 27 connected by way of a support arm 27b to the chair's legs 23 and/or back support. The support pads 27a of the armrests 27 are fashioned from a compression molded armrest piece, preferably a polyurethane piece, which contains silver 0,001 - 0,6% by weight uniformly blended within the total volume of a resin used for the compression molding of the armrest pad.

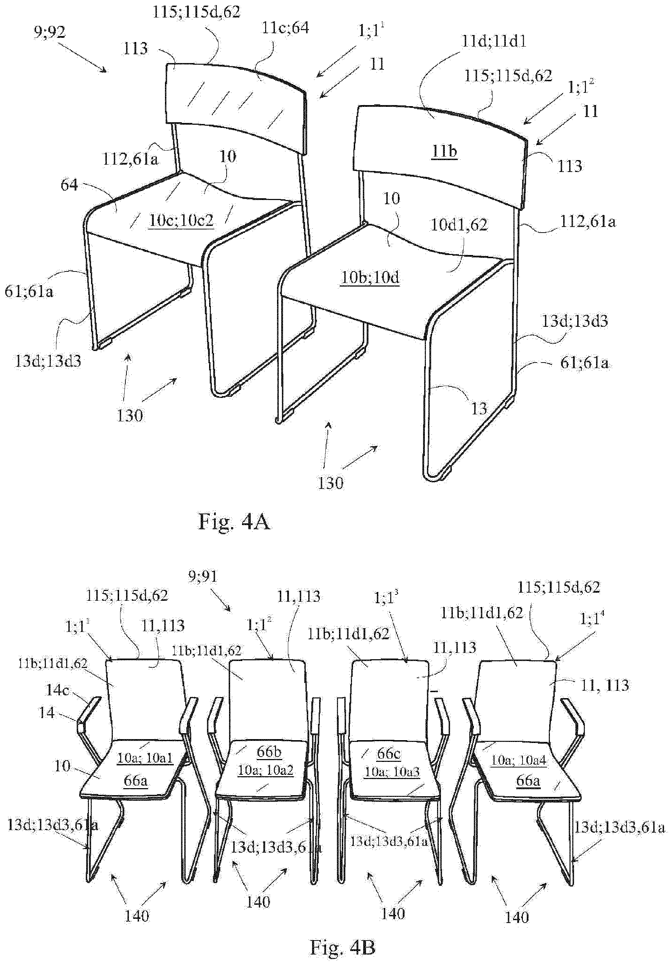

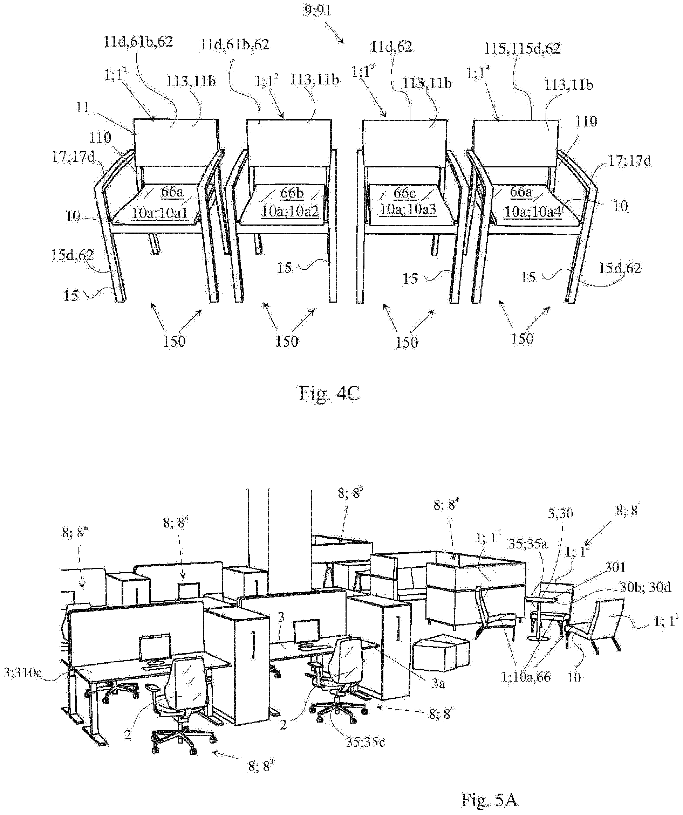

Figs. 4A as well as 4B and 4C illustrate various chairs 1, especially customer chairs, which can be used in furniture sets shown in figs. 1A, 1B and 2A in place customer chairs depicted therein. Therein have been used various antimicrobial coatings capable of eliminating in the aforementioned ISO 22196 or JIS Z 2801 tests at least 95% of selected pathogenic bacteria.

Hence, fig 4A reveals a pair of chairs 1; 1' and 1; 1", which can be used for example in the fixture assembly presented in fig. 2A in place of customer chairs depicted therein.

The chairs 1; 1¹, 1; 1² included in a plurality of chairs 9; 92 visible in fig. 4A are both metal-frame customer chairs. The outwardly exposed surfaces of these customer chairs 1; 1¹, 1; 1² are again potential contact surfaces, which are provided with coatings comprising antimicrobial silver. Each customer chair 1; 1¹ and 1; 1² comprises a wood-frame seat panel 10 having its topside and side edges provided either with an antimicrobial plastic laminate coating 10c; 64 or with a wood veneer overlay 10b, wherein the veneering is additionally topped with an antimicrobial paint surface 10d, especially an antimicrobial lacquer coating 10d1; 62. Preferably, the lacquer coating 10d1 is treated and rendered microbicidal by supplementing only its topmost lacquer layer with silver compounds. Fabrication of and the amount of silver contained in the antimicrobial laminate coating 10c; 64 (melamine laminate or polyester laminate) of the seat panel 10 were similar to what is presented in fig. 7C. Hence, the laminate coating's topmost resin layer contains silver in such a way that the amount of silver is 0,001-0,6% by weight, preferably 0,003-0,3% by weight, of the laminate coating's weight.

With regard to the fabrication of an antimicrobial lacquer coating 10d1; 62 present on top of the wood veneer overlay 10b, and the paint's silver contents, reference is made more precisely to figs. 7D and 7E. The topmost lacquer layer contains silver and the amount of silver is again 0,001-0,6% by weight, preferably 0,003-0,3% by weight, calculated from the lacquer coating's dry weight.

The seat panel's 10 underside is generally painted, and is not a paint surface rendered antimicrobial by treating with a silver compound because the seat panel's 10 underside is not generally regarded as a contact surface which would require treatment with silver compounds.

From the seat panel 10 of both customer chairs 1; 1¹, 1; 1² rises upward a back support 11 which includes a metal support frame 112, said support frame 112 being provided with an upward directed wooden backrest 113. The back support 11 has its upward extending metal frame coated with an antimicrobial powder paint coating 61a in a manner similar to that illustrated in fig. 7F for the table's 1 aluminum-constructed leg 13 which is overlaid with an antimicrobial powder paint coating 61; 61a. The amount of microbicidal silver was 0,001-0,6% by weight calculated from the powder paint layer's 61a dry weight.

The back support 11 has its metal support frame 112 provided with a plate-like wooden backrest 113 which can be manufactured from a compression molding, plywood, or solid wood.

The first customer chair 1; 1¹ has each side of its backrest 113 overlaid with a plastic laminate coating 11c, which includes an antimicrobial treatment. Each side of the backrest 113 is overlaid with a melamine resin-based plastic laminate coating 11c. The plastic laminate coating on each side of the backrest 113 has a total thickness of about 0,4-0,8 mm and the plastic laminate coating of each side has been supplemented with an antimicrobial silver compound in a manner similar to that illustrated in fig. 7C. Fabrication of and the amount of silver contained in the plastic laminate coating 11c, 64 (melamine laminate) were similar to what is illustrated in fig. 7C. In this case, as well, the plastic laminate's topmost surface film 64¹, 64a was excluded completely and replaced by impregnating a topmost decorative paper 64², 64b two times with melamine resin.

Silver-containing silver phosphate glass, in which the silver phosphate glass has a general formula Ca₃₀Na20₋ₓP₅₀Agₓ and x is 0,1-10, preferably 0,5-5, was only incorporated in resin used for the latter impregnation of decorative paper. Thereby, directly on top of the decorative paper could be formed a thin resin-containing surface film with silver compound therein. After treatment, the thin surface film of the topmost decorative paper 64b contained silver again about 0,001-0,6% by weight calculated from the amount of resin incorporated in the topmost surface film.

The second customer chair 1; 1² has its backrest 113 covered with an adhesive wood veneer overlay 11b on each side. The wood veneer overly 11b is further coated with a wood paint coating 11d, especially a furniture lacquer coating 11d1, which includes 2-3 lacquer layers, each paint layer having a dry thickness of 20-40 µm. The wood paint coating 11d has its topmost lacquer layer in either case treated with an antimicrobial silver compound, such as silver phosphate glass, as explained in detail in figs. 7D-7E and in the description related thereto. The amount of microbicidal silver in all wood paint coatings was 0,001-0,6% by weight calculated from the wood paint coating's dry weight.

All 4 legs of both chairs 1; 1¹, 1; 1² are metal legs 13 (so-called tubular leg), which are overlaid with a powder paint coating 13d3. The powder paint surface 13d3 of each chair leg is formed as an antimicrobial powder paint coating 61; 61a as presented later in more detail in connection with the description of fig. 7F. The powder paint surface 61; 61a is made by spraying or otherwise applying powder paint onto the chair leg 13 for a uniform powder paint layer of about 100 µm, which produces, upon drying, a powder paint coating 61a (powder paint film) of about 50-60 µm which contains some silver-containing antimicrobial, bonded-to-carrier compound such as zeolite-bonded silver, titanium dioxide-bonded silver chloride, or silver phosphate glass. Silver phosphate glass, reaction mass of silver chloride and titanium dioxide, or silver-containing zeolite is mixed into the powder paint in such an amount that the dry paint film 61a contains silver 0,001-0,6% by weight of the powder paint film's weight or the powder paint's dry matter content.

The edges (rims) 115 of the backrests 113 of both customer chairs of fig. 4A are also contact surfaces, the paint surface 115d present thereon having been formed as an antimicrobial lacquer coating 115d, 62 in a manner similar to that described more closely in connection with figs. 7D and 7E. The top edges have been coated 2-3 times with a furniture lacquer and the topmost lacquer layer has been supplemented with silver, such that the amount of silver is 0,001-0,6% by weight, preferably 0,003-0,3% by weight, of the lacquer surface's dry weight. This paint surface eliminates in test ISO 22196 or JIS Z 2801 at least 95% of the bacteria used in the test.

Fig. 4B depicts a group of customer chairs 9; 91, including four metal-frame customer chairs 1; 1¹-1; 1⁴. Of these, any given chair 1; 1¹-1; 1⁴ can each be used in place of the customer chairs shown in figs. 1A and 1B. All these chairs 1; 1¹-1; 1⁴ have chair legs 13 with a metal tubular body, which have been treated in a manner similar to the chair legs shown in fig. 4A, i.e. by coating the metal legs 13 with a microbicidal powder paint coating 13d3, 61a. The powder paint surface 13d3 of each chair leg 13 is formed as an antimicrobial powder paint coating 61; 61a as explained in more detail i.a. in connection with the descriptions of both fig. 4A and later fig. 7F. The powder painted tubular legs 13 contain silver 0,001-0,6% by weight of the powder paint film's dry weight or the powder paint's dry matter content. This powder paint surface eliminates in test ISO 22196 or JIS Z 2801 at least 95% of selected bacteria.

All these customer chairs 1; 1¹-1; 1⁴ include a wood-frame back support 11, which rises upward from a seat panel 10 of each chair 1 and serves simultaneously as a backrest 113. The back support 11 of each customer chair is covered with an adhesive wood veneer overlay11b on each side. The wood veneer overlay 11b is again coated with a wood paint coating 11d, especially with a furniture lacquer coating 11d1, which includes 2-3 lacquer layers, each paint film having a dry thickness of 20-40 µm. The wood paint coating 11d has its topmost lacquer layer treated with an antimicrobial silver compound, such as silver phosphate glass, as explained in more detail in figs. 7D-7E and in the description related thereto. The amount of microbicidal silver in the lacquer coatings of all customer chairs 1; 1¹-1; 1⁴ was 0,001-0,6% by weight, preferably 0,003-0,3% by weight, calculated from the furniture lacquer coating's dry weight. Such a microbicidal lacquer coating 62 eliminates in the aforementioned test ISO 22196 or JIS Z 2801 at least 95% of the bacteria used in the test.

Each customer chair 1; 1¹, 1; 1², 1; 1³, 1; 1⁴ of fig. 4B further comprises a wood-frame seat panel 10, having its topside provided with textile covering 10; 10a1, 10a2, 10a3, 10a4 which has been provided as an antimicrobial textile covering 10a, 66. Preferably, the antimicrobial textile covering 10a, 66 is a fabric upholstery, which has been rendered microbicidal by incorporating therein silver-containing polyamide fibers (fabric 66a) or isothiazolidine compounds (fabric 66b) or organofunctional silanes (fabric 6c). With regard to manufacturing the antimicrobial fabric upholsteries 10, 66 for the seat panel 10, reference is made more precisely to fig. 7B as well as to the description of said figure.

Each customer chair 1; 1¹, 1; 1², 1; 1³, 1; 1⁴ of fig. 4B is further provided with an armrest 14, which is coupled with the legs 13 of the customer chair 1 and with a metal seat panel support extending underneath the seat panel 10. The armrest 14 includes a horizontal, plastic armrest element 14c inside which can be a bracing member. The actual horizontal armrest element 14c consists of compression molded, fiberglass-reinforced copolymer plastic (polyamide), wherein the amount of a bonded-to-carrier silver compound (Ag), uniformly blended within the total volume of the copolymer resin, is during the armrest element 14c manufacturing step 0,001-0,6% by weight calculated from the total weight of a copolymer resin constituting the armrest element. Other types of plastics can also be used.

Preferably, the silver is added in a bonded (directly or indirectly) form to a carrier, i.e. either in the form of silver phosphate glass, titanium dioxide-bonded silver chloride, or silver zeolite, and into the total volume of resin to be injection molded, i.e. into a so-called masterbatch. As for a more precise description of the armrest, reference is here made to fig. A and its explanation.

Further in the customer chairs 1; 1¹-1; 1⁴ shown in fig. 4B, the ends of each chair, which are transverse to the plane of the backrest 113, i.e. the backrest's edges 115d, are also contact surfaces. Thus, the backrest's edges are formed with a paint surface 115d which has been formed as an antimicrobial lacquer coating 62 in a manner similar to that described more closely in connection with figs. 7D and 7E. The backrest's edges 115 have been coated 1-2 times with a furniture lacquer and the topmost lacquer layer has been supplemented with silver and the amount of silver is 0,001-0,6% by weight, preferably 0,003-0,3% by weight, of the lacquer coating's dry weight.

Fig. 4C, on the other hand, reveals a group 9; 92 of wood-frame customer chairs 1; 1¹-1; 1⁴.

All these customer chairs 1; 1¹-1; 1⁴ are provided with a back support 11, which rises upward from a seat panel of the chair 1 and includes a wooden support frame 110 to which is attached a backrest 113. The backrest 13 of each customer chair is also wood-framed and coated with an adhesive wood veneer overlay 11b on each side. The wood veneer overlay 11b is covered with a wood paint coating 11d, particularly with a furniture lacquer coating 11d1, which includes 1-2 lacquer layers, each paint film having a dry thickness of 50-60 µm. The wood paint surface 11d (lacquer) is formed as an antimicrobial lacquer coating 62 by treating the topmost lacquer layer with an antimicrobial silver compound such as silver phosphate glass. This is explained in more detail in figs.7D-7E and in the description which relates thereto and to which is here referred. The amount of microbicidal silver in the lacquer coatings of all customer chairs' 1; 1¹-1; 1⁴ backrests 13 was 0,001-0,6% by weight, preferably 0,003-0,3% by weight, calculated from the lacquer coating's dry weight.

The edges 115 of the backrests 113 of the customer chairs 1; 1¹-1; 1⁴ shown in fig. 4C are contact surfaces, whereby the paint surface 115d present thereon has been formed as an antimicrobial lacquer coating 115d, 62 in a manner similar to that described more closely in connection with figs. 7D and 7E. The edge of a backrest 113 refers here again to a surface which is perpendicular relative to the plane of a face surface (front or rear surface) of the backrest 113. Edges 115t have been treated 1--3 times with a furniture lacquer and the topmost lacquer layer has been supplemented with silver and the amount of silver is 0,001-0,6% by weight, preferably 0,003-0,3% by weight, of the lacquer coating's dry weight.

The customer chairs shown in fig. 4C have chair legs 15 thereof, and armrests 17 adjoining the legs 15 as well as the seat panel, made of wood. The chair legs 15 and the armrests 17 have been surface-treated with a furniture lacquer. A furniture lacquer coating 15d of the chair legs 15 and a respective furniture lacquer coating 17d of the armrests 17 have been made antimicrobial the same way as the edges of the backrests 113 and, regarding the preparation of a lacquer coating, reference is here made also to the description of figs. 7D and 7E. The amount of bonded-to-carrier silver (Ag) is again 0,001-0,6% by weight calculated from the lacquer layer's dry weight for the topmost lacquer layer which has been rendered microbicidal.

Each customer chair 1; 1¹, 1; 1², 1; 1³, 1; 1⁴ of fig. 4C comprises a wood-frame seat panel 10 (cf. also fig. 4B). The seat panel 10 of each chair has its topside provided with a textile covering 10a; 10a1, 10a2, 10a3, 10a4, which is provided as an antimicrobial textile covering 10a, 66. Preferably, the antimicrobial textile covering 10a, 66 is a fabric upholstery that has been rendered microbicidal by incorporating therein silver-containing polyamide fibers (fabric 66a) or isothiazolidine compounds (fabric 66b) or organofunctional silanes (fabric 66c). With regard to manufacturing the antimicrobial fabric upholsteries 10a, 66 for the seat panel 10, reference is made more closely to fig. 7B as well as to the description of said figure.

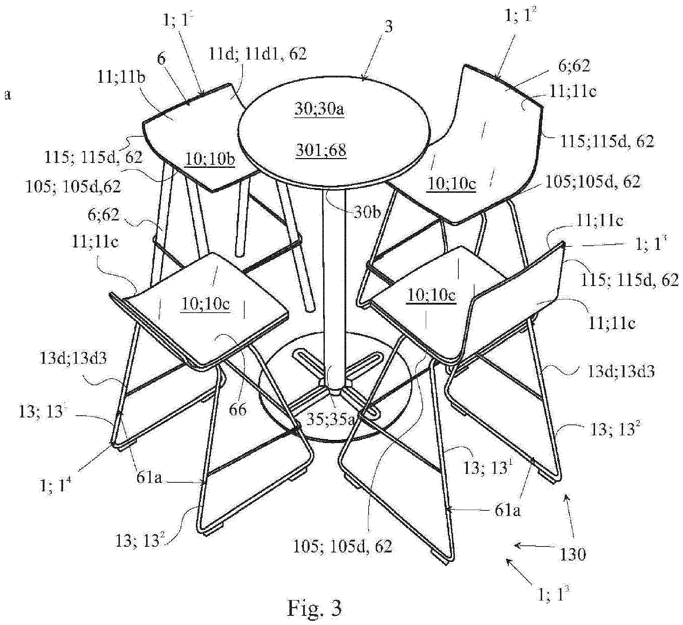

In fig. 3, on the other hand, is illustrated a group of furniture present in a single space, such as an office room, the pieces of furniture thereof being adapted for simultaneous use. This group of furniture includes a table 3 with a metal-coated circular tabletop 30. The tabletop rests on a floor by way of a metal leg post 35; 35a and a base included therein. The leg post 35; 35a can also be manufactured from solid wood overlaid in a per se conventional manner with a furniture paint or lacquer. The leg post 35 does not usually have its paint coating provided with antimicrobial activity, because in normal circumstances the leg post is not within contact distance from the user who is leaning on the tabletop.

The table 3 has a metal coating 301 of its tabletop 30 comprising in this case at least a top surface 30a of the tabletop and it is manufactured from antimicrobial brass 68 or from a copper alloy with at least 60% copper (not shown in the figure). The table 3 has the top surface 30a of its tabletop provided with an antimicrobial brass coating 68, which fulfills the requirements of the aforementioned EPA test protocol against pathogens mentioned therein.

The tabletop may have its undersurface provided with a metal coating, backing paper, or plastic laminate which does not necessarily have antimicrobial activity. In hospital applications, the table's undersurface can also be rendered antimicrobial as described earlier.

In the embodiment of the invention depicted in fig. 3, the tabletop 3 has its topside and underside provided with a metal-coated tabletop 30. The tabletop 30 has its vertical edge 30b provided with a polymer rim 30d, which is here a polyester-based edge strip 30e. The polymer edge may also comprise for example acrylonitrile butadiene styrene. The metal-coated tabletop 30 has its polymer rim 30b rendered antimicrobial in such a way that the polyester resin making up the edge strip 30e has been supplemented, in the edge strip manufacturing process, with bonded-to-carrier silver in such an amount that the edge strip, whose thickness is 0,5-4 mm, contains silver 0,001-0,6% by weight calculated from the weight of a polyester resin used for manufacturing the edge strip.

The polymer rim 30d of a metal-coated tabletop 30 could also be an edge casting 30f made of polyurethane, into which is admixed, during the course of mold casting, bonded-to-carrier silver 0,001-0,1% by weight calculated from the weight of a polyurethane resin used for manufacturing the edge casting.

The table 3 is surrounded in the working example shown in fig. 3 by four customer chairs 1; 1¹-1; 1⁴, of which two customer chairs 1; 1³ and 1;1⁴ placed in the foreground as well as one customer chair 1; 1² visible further back on the right are provided with metal legs 13. These tubular-bodied metal legs 13 have been coated with a powder paint coating 13d3, said powder paint surface having been rendered antimicrobial in a manner presented more precisely in fig. 7F: the aluminum-constructed leg 13 of each customer chair 1 is coated with an antimicrobial powder paint coating 61; 61a said powder paint coating being supplemented with bonded-to-carrier silver compounds in such an amount that the powder paint surface 61a contains silver 0,001-0,6% by weight calculated from the powder paint coating's 61a dry weight. In practice, the amount of a microbicidal silver compound is generally calculated in such a way that the amount thereof is about 0,001-0,1% by weight of the dry weight of a binder making up the powder paint film.

The seat panel 10 as well as the back support/backrest 11, 113 of all the customer chairs 1; 1¹-1; 1⁴ visible in fig. 3 are made of wood. The seat panel 10 and the backrest/back support 11, 113 have all exposed surfaces thereof treated so as to possess antimicrobial activity, i.e. to be capable of eliminating in test ISO 22196 or JIS Z 2801 at least 95% of bacteria used in the test. The back support 11 of the chairs 1; 1², 1; 1³, and 1; 1⁴ consists of a continuous wood-framed backrest 113. Both the seat panels 10 and the back supports 11 are coated over front and rear sides thereof with a polyester resin- or melamine resin-based plastic laminate 11; 11c and this plastic laminate is supplemented, during fabrication, with silver phosphate glass having a general formula Ca₃₀Na20₋ₓP₅₀Agₓ, wherein X=0,1-10, preferably 0,5-5, as described more precisely in fig. 7C. The resulting plastic laminate coating has a thickness of 0,4-1,4 mm and it has, in the topmost decorative paper, silver 0,001-0,6% by weight calculated from the weight of a silver-treated polyester resin or melamine resin added into the decorative paper.

On a vertical edge (rim) 105 of the seat panel as well as on a vertical edge (rim) 115 of the back support 11c of each customer chair 1; 1¹-1; 1⁴ is further produced a paint surface 105d, 115d, including 1-2 paint layers, and into the topmost paint layer has been added bonded-to-carrier silver for example in the form of silver phosphate glass. Silver phosphate glass has a general formula Ca₃₀Na20₋ₓP₅₀Agₓ, wherein X=0,1-10, preferably 0,5-5, thus obtaining silver into the topmost paint film and the amount of silver is 0,001-0,6% by weight, preferably 0,003-0,3% by weight, calculated from the paint coating's 105d, 115d dry weight. The topmost paint layer, when dry, has a thickness of 20-40 µm provided that the paint or lacquer has respectively a dry weight 20-40% by weight.

On the other hand, the first customer chair 1; 1¹, shown further back on the left in the figure, has each side of its back support 11 as well as its seat panel 10 provided with respective wood veneer overlays 11; 11b and 10; 10b. The wood veneer overlay 11b or 10b is covered with a paint coating 11d; 11d1 or 10d; 10d1, including 1-3 paint layers, and the topmost paint layer is supplemented with bonded-to-carrier silver for example in the form of silver phosphate glass. The silver phosphate glass has a general formula Ca₃₀Na20₋ₓP₅₀Agₓ, wherein X=0,1-10, preferably 0,5-5. Into the topmost paint film is again obtained silver in such a way that the amount of silver is 0,001-0,1% by weight, preferably 0,003-0,3% by weight, calculated from the paint coating's 11d1 or 10d1 dry weight. The topmost paint layer, when dry, has a thickness of 20-40 µm.

The first customer chair 1; 1¹ has its chair legs 15 made of solid wood and provided with an antimicrobial lacquer coating 6; 62 with 1-3 lacquer layers. The topmost paint layer has been supplemented with bonded-to-carrier silver in the form of silver phosphate glass, said silver phosphate glass having a general formula Ca₃₀Na20₋ₓP₅₀Agₓ, wherein X=0,1-10, preferably 0,5-5. The topmost paint film shall obtain silver, the amount of silver being 0,001-0,6% by weight, preferably 0,003-0,3% by weight, calculated from the lacquer coating's dry weight. The topmost paint layer, when dry, has a thickness of 20-40 µm.

In fig. 7A there is illustrated, in a side view, an armrest 14 capable of coupling with the legs and/or back support of a chair 1, such as a customer chair, or an office chair 2. The armrest 14 comprises a vertically downward-directed leg member 14a adjoining a leg of the chair, as well as a diagonally downward-directed metal seat member 14b likewise coupled with supports of the seat panel 10. Adjoining what in a view from the seat panel is a top end of the leg member 14aas well as the seat member14b is an actual horizontal, compression-molded plastic armrest member 14c inside which may further be a bracing member. The actual horizontal armrest member 14c is made up of compression-molded, fiberglass-reinforced copolymer plastic (polyamide), in which, during the course of manufacturing the armrest member 14c, in a form evenly blended within the total volume of the copolymer resin, there is present some bonded-to-carrier silver compound (Ag) 0,001-0,6% by weight calculated from the total weight of a copolymer resin constituting the armrest member. Other types of plastic can also be used. Preferably, the silver is added in the form of being bonded to a carrier, i.e. either as silver phosphate glass, titanium dioxide-bonded silver chloride, or zeolite, into the total volume of a compression-moldable resin, i.e. into a so-called masterbatch.

Fig. 7B reveals an antimicrobial fabric covering 66 placed on top of the wood material-constructed seat panel 10, 20 of a piece of furniture, such as a customer chair 1 or an office chair 2, or an antimicrobial fabric covering 66 placed on top the backrest 11, 21. The fabric upholstery 66 can be provided in various ways with antimicrobial activity fulfilling the selected test standards against e.g. K. pneumonia or S.aureus. The antimicrobial activity can be achieved, among others, with silver 66a bonded to polyamide fibers, with silane derivatives 66b, or with isothiazolidine 66c.

Fig. 7C reveals a typical antimicrobial plastic laminate 64, which in the figure is a melamine laminate 641 that can be e.g. a laminate coating 310c for a wooden tabletop 31, a laminate coating for a wood material-constructed desk 5, a laminate coating 11c for a wood material-constructed backrest 11 of the chair 1, or a laminate coating 10c for a wood material-constructed seat panel 10 of the chair 1. The plastic laminate 64, visible in the figure, includes six films 64¹... 64⁶ which are pressed to mutual adherence by the application of heat. The number of films may also be fewer. These films 64¹... 64⁶ are denoted in the figure with reference numerals 64a, 64b, 64c, 64c, 64b. Of these, reference numeral 64a stands for a surface film, which is for example cellulose paper with melamine resin impregnated therein 60-80 g/m². Reference numeral 64b stands for decorative paper having melamine resin impregnated therein 120-150 g/m². Reference numeral 64c, in turn, stands for base paper impregnated with phenol resin 120-150 g/m². Instead of/in addition to melamine resin, the plastic laminate 64 can be prepared by using, among others, phenol resins as well as polyester resins. With regard to general engineering for manufacturing the plastic laminate 64, reference is here made to per se known prior art such as Koponen, H 1991, Puutuotteiden jalostus ja kehitys (Refinement and development of wood products), 538, Otatieto Oy, Espoo.

The plastic laminate can be rendered antimicrobial by various treatments: either its topmost decorative paper 64², 64b, its topmost decorative paper 64², 64b as well as its topmost surface film 64¹, 64a only, or all its films 64¹... 64⁶ can be subjected to an antimicrobial treatment. In addition, it is also possible to exclude the topmost surface film 64¹, 64a and instead to impregnate the topmost decorative paper 64², 64b two times with resin and to incorporate the antimicrobial silver treatment in the latter impregnation of decorative paper. The amount of antimicrobial silver is in all treatments 0,001-0,6% by weight, nevertheless calculated only for treated films. Preferably, the silver is added in a bonded-to-carrier form, i.e. in the form of silver phosphate glass, titanium dioxide-bonded silver chloride, or zeolite, into a film-forming resin, such as melamine resin, as paper is impregnated with resin. By selecting for an antimicrobial treatment only a certain film/films 64¹... 64⁶ of the plastic laminate 64, there is provided a highly cost-effective treatment practice applicable to large production rates.

In one preferred embodiment, silver was added into the plastic laminate 64 in the form of silver phosphate glass. The silver phosphate glass ad a general formula Ca₃₀Na20₋ₓP₅₀Agₓ, wherein X=0,1-10, preferably 0,5-5. The thereby produced, silver phosphate glass-treated plastic laminate 64 can be used as a laminate coating, among others, in a topside laminate coating 310c for the wood-framed tabletop 31, as a topside laminate coating for the reception desk 5, as a laminate coating 11c for a backrest 11 of the chair 1, or as a laminate coating for a seat panel 10 of the chair 1. The tabletop's 31 surface and the reception desk 5 are usually only treated over a top side or service side thereof with silver phosphate glass while the other side, i.e. the underside, is usually left untreated.

Figs. 7D-7E reveal, on the other hand, a wood material-constructed furniture surface, such as a wood surface, a wood veneer overlay, or a tabletop's edge strip, which has been treated with a liquid surface treatment agent or paint, in this case with a furniture lacquer for producing a lacquer coating 62. The lacquer coating 62 comprises 1-3 lacquer layers, each of said layers having a wet thickness of about 100 µm - 120 µm and a dry thickness of about 20-40 µm. The lacquer coating 62, visible in fig. 7D, includes two overlapping lacquer layers 62¹, 62², each lacquer layer, when wet, having a thickness of about 100 µm and, the lacquer films (lacquer coating) composed thereby, when dry, having a total thickness d1 of about 20-40 µm. The lacquer coating 62, visible in fig. 7E, includes in turn just one lacquer film having a thickness d2 when dry. The antimicrobial activity has been achieved in the lacquer coating presented in each figure 7D, 7E by supplementing the topmost lacquer layer with silver phosphate glass which had a general formula Ca₃₀Na₂₀₋ₓP₅₀Agₓ), wherein x=0,1-10, preferably x=0,5-5. Ca₃₀Na₁₅₋ₓP₅₀Agₓ and x is e.g. within the range of 0,1-10. The amount of microbicidal silver is thus 0,001-0,6% by weight, preferably 0,003-0,3 p-%, of the lacquer layer's dry weight. In practice, the amount of a microbicidal silver compound is calculated in such a way that it is added into the lacquer layer about 0,001-0,1% by weight, preferably 0,003-0,3% by weight, calculated from the dry matter content of a dry paint film formed by the lacquer layer.

The number of lacquer films in a paint coating 61, such as the lacquer coating 62, can also be larger in some treatments in case a particularly durable/glossy surface is desired. Such can be for example a lacquer finish on the backrest 113 of a seat 1 or a lacquer finish on the seat panel 10 of a seat 1, wherein the edge is lacquered 1-3 times.

Fig. 7F, on the other hand, presents a metal surface, such as an aluminum-constructed leg 13 for the chair 1, which is coated with an antimicrobial powder paint coating 61; 61a. The amount of microbicidal silver is 0,001-0,6% by weight, preferably 0,003-0,3% by weight, calculated from the powder paint coating's 61a dry weight. In practice, the amount of a microbicidal silver compound is generally calculated in such a way that its amount is about 0,001-0,6% by weight of the dry weight of a binder constituting the powder paint film.

Fig. 7G shows schematically a portion of the end face for a wooden tabletop 31 of the table 3, wherein the vertical plane passing by way of an edge 33 is transverse relative to a horizontal plane of a topside of the tabletop visible in fig. 7G. The tabletop 31 has its end face formed with an elongated antimicrobial polymer rim 33d, 63 co-directional with a top edge 31b of the tabletop. The polymer rim 33d can be either an edge casting 33f constructed of polyurethane or an edge strip 33e fabricated from polyester or acrylonitrile butadiene styrene. An antimicrobial silver compound, such as the aforementioned silver phosphate glass whose general formula is Ca₃₀Na₂₀₋ₓP₅₀Agₓ), wherein x=0,1-10, preferably x=0,5-5, is added in a polymer rim manufacturing process into polyurethane resin (edge casting) or polyester resin (edge strip) forming the polymer rim 33d.

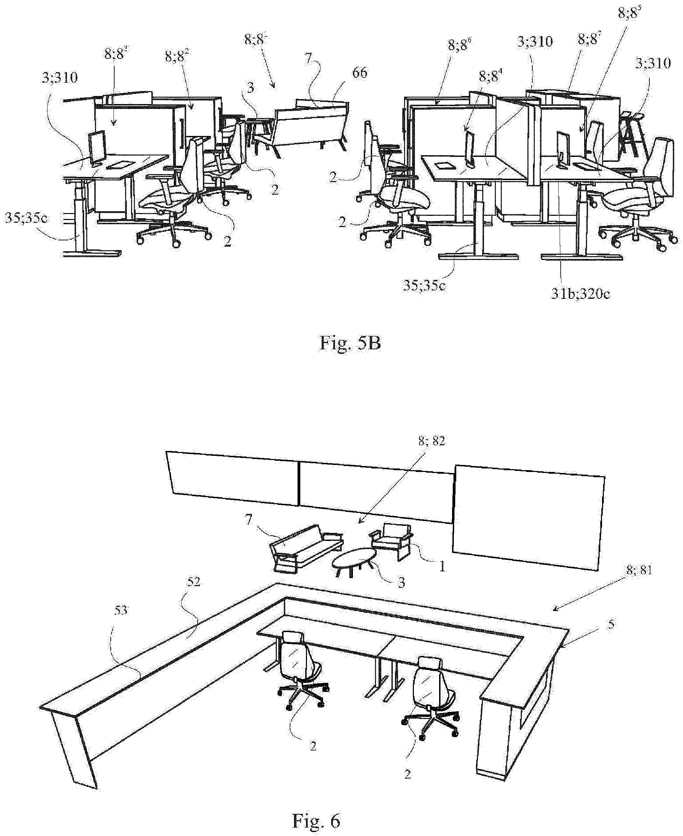

Figs. 5A and 5B each reveal a number of antimicrobial fixture assemblies 8 separated by space dividers (partitions).

Fig. 5A shows, in a view diagonally from above, an open-plan office, wherein space dividers (partitions) are used for defining various fixture assemblies 8; 8¹, 8; 8², 8; 8^{3,} 8; 8⁴... 8ⁿ. The pieces of furniture included in each fixture assembly 8; 8¹, 8; 8², 8; 8^{3,} 8; 8⁴ etc. are intended for simultaneous use.

Described more precisely hereinafter will be three fixture assemblies 8; 8¹, 8; 8², and 8; 8³ visible in the front area. Thus, the fixture assembly 8; 8¹ visible in front on the right includes a table 3 provided with a metal-coated tabletop 30.

From the tabletop's underside extends downward a metal leg post 35; 35a, which terminates in a metal base. The leg post 35; 35a, as well as its base, is provided with an antimicrobial powder paint surface 60; 61a. The table 3 has a metal coating 301 of its tabletop 31 covering either the entire tabletop or just a portion thereof and it is prepared from antimicrobial brass or from a copper alloy with at least 60% copper. Here, the entire tabletop in terms of its material consists of brass or a copper alloy with at least 60% copper. The antimicrobial brass or copper alloy fulfills the requirements of the aforementioned EPS protocol.

The tabletop may have its vertical edge 30b, bounded by top- and undersides of the tabletop, provided with a polymer rim 30d such as an edge strip 30e or an edge casting 30f. In case the tabletop is fabricated in its entirety from antimicrobial brass or a copper alloy with at least 60% copper, the vertical edge 30b can be left untreated.

In case the metal-coated table 3 has its vertical edge 30b provided with a polymer rim 30d, it will nevertheless be rendered antimicrobial by supplementing the polyurethane resin in casting process with such an amount of a bonded-to-carrier silver compound that the polymer rim, manufactured from polyurethane casting, has a thickness of 1-5 mm and contains silver 0,001-0,6% by weight calculated from the weight of polyurethane resin used for casting said polymer rim.

The metal-coated table 3 can also have its polymer rim 30 rendered antimicrobial also in such a way that the polymer rim is an edge strip 30e which is rendered antimicrobial by supplementing the edge strip-forming polyester resin, in the edge strip manufacturing process, with a silver compound in such an amount that the edge strip, having a thickness of 0,5-4 mm, contains silver 0,001-0,6% by weight calculated from the weight of polyester resin used for making the edge strip.

Hence, this metal-coated table 3 included in the fixture assembly 8; 8¹ is, in terms of the structure of a tabletop and a base and in terms of antimicrobial treatment of the tabletop, highly similar to that already illustrated earlier in fig. 3. In terms of manufacturing an antimicrobial powder paint coating for the leg 35; 35a of this table 3, the coating thickness, and the amount of silver present in the coating, reference is instead made to fig. 7F and its description.

In addition, the first fixture assembly 8; 8¹, visible in front on the right, also includes three customer chairs 1; 1¹, 1; 1², 1; 1³. All chairs 1 are provided with metal legs having an antimicrobial powder paint surface. In terms of manufacturing an antimicrobial powder paint coating for the chair legs, the coating thickness, and the amount of silver present in the coating, reference is again made to fig. 7F and its description. The chairs have a topside and sides of the seat panels 10 thereof, as well as the backrest 13 of its back support 11, upholstered all over with an antimicrobial fabric. In terms of the manufacturing and properties of an antimicrobial fabric upholstery 66 for seat panels and the backrest 13 of the chairs, reference is made to fig. 7B and its description. In this case, likewise, the antimicrobial activity can be imparted to the fabric, among others, with silver bonded to polyamide fibers, with silane derivatives, or with isothiazolidine.

Fig. 5A also reveals, in the front center and on the left, two identical fixture assemblies 8; 8² as well as 8; 8³, which are made up of an electric table 3 equipped with adjustment legs, as well as of an office chair 2. The antimicrobial coatings of both the office chair 2 and the electric table are similar to those described earlier in connection with the description of figs. 2A and 2B.

Fig. 5B likewise illustrates various fixture assemblies 8; 8¹, 8; 8²... 8; 8⁷ used in open-plan office. The fixture assemblies 8; 8²... 8;8⁷ comprise identical fixture assemblies, which are made up of an electric table 3 equipped with adjustment legs, as well as of an office chair 2. The general structure of both the office chair 2 and the electric table, as well as the antimicrobial coatings thereof, are similar to those described earlier in connection with the description of figs. 2A and 2B.

Thus, among others, the powder paint surface of the electric table's 2 pair of metal adjustment legs 35; 35c has been left without additional antimicrobial treatment due to not being generally regarded as a contact surface. The electric table 3 has its furniture board-constructed tabletop coated over its topside with a plastic laminate coating 310c and, during its preparation process, the plastic laminate coating 310c has been supplemented with bonded-to-carrier silver compounds in such an amount that the plastic laminate coating has been rendered antimicrobial, thereby achieving the antimicrobial activity against selected pathogenic bacteria as determined in the aforementioned standards ISO 22196 or JIS Z 2801. The underside plastic laminate coating (or backing paper) of the electric table 3 is not generally considered a contact surface (cf. description of fig. 2A for electric table's coatings). In this case, as well, the vertical rim abutting on a topside of the electric table 3 was formed as a silver-containing antimicrobial polymer rim, regarding whose silver content and manufacturing method, reference is here made to fig. 7G and its description.

The fixture assembly 8; 8¹, on the other hand, comprises a fixture group in the waiting area of an open-plan office, the pieces of furniture included therein being intended for simultaneous use. By simultaneous use is here expressed that the user is able to use each piece of furniture at the same time or is able to at least reach one piece of furniture while being next to the other.

This fixture assembly includes a sofa 7, a customer chair 1 in the rear, as well as a table 3. Except for sofa legs, the sofa 7 is upholstered all over with a fabric upholstery 66 which contains an antimicrobial treatment. Preferably, the sofa 7 has its antimicrobial upholstery rendered microbicidal by incorporating therein silver-containing polyamide fibers or isothiazolidine compounds or organofunctional silanes. With respect to the manufacturing of and amount of silver in these textile upholsteries 66, reference is made more closely to fig. 7B as well as its description.

The sofa 7 has its solid wood-constructed short legs surface-treated with a liquid surface treatment agent such as furniture lacquer. The sofa legs are nevertheless not treated with microbial silver compounds as said legs are not contact surfaces. In terms of its antimicrobial surface treatments and structure, the customer chair 1 can be similar to that already described earlier e.g.in figs. 1A, 1B, 2 and 3, which is why, in this respect, reference is indeed made to the description of these figures.

If the sofa legs are longer and for example in connection with the armrest, they are generally considered contact surfaces and treated with an antimicrobial furniture lacquer.

In fig. 6 there are illustrated two different fixture assemblies 8; 81 and 8; 82.

The first fixture assembly 8; 81, visible in the front area, comprises a reception desk 5 and two office chairs 2; 2¹ and 2; 2² in conjunction therewith.

The second fixture assembly 8; 8², visible in the rear area, comprises in turn a negotiation table 3, a sofa 7, and a customer chair 1.

Regarding the pieces of furniture included in the fixture assembly 8; 8², the sofa 7 has a structure and antimicrobial treatment similar to those described above in connection with the fixture assembly 8; 81 of fig. 5B. The sofa 7 consists of a seat member and a backrest member, which are covered (upholstered), sofa legs excluded, all over with fabric upholstery 66 which has been subjected to antimicrobial treatment. The customer chair is also upholstered all over with fabric upholstery 66 which has been subjected to antimicrobial treatment. The antimicrobial textile upholstery of the sofa 7 has been rendered microbicidal by incorporating therein silver-containing polyamide fibers or isothiazolidine compounds or organofunctional silanes as described more precisely e.g. in connection with the description of fig. 7B.

The negotiation table 3 is provided with a tabletop, which is constructed from furniture board or solid wood and from whose underside extend downward four table legs made of wood material. The tabletop may be covered with a laminate coating, preferably a plastic laminate coating, as more closely presented in fig. 7C and its description. The plastic laminate's topmost film (decorative paper + melamine resin) contains silver and the amount of silver is 0,001-0,6%by weight, preferably 0,003-0,3% by weight, calculated from the weight of melamine resin. The tabletop can also be provided with thin veneering, which is subsequently rendered antimicrobial by varnishing the veneer overlay with a furniture lacquer 1-3 times and by supplementing the topmost paint/lacquer film with bonded-to-carrier microbicidal silver in a manner similar to that described more precisely in connection with figs. 7D-7E and in such an amount that the antimicrobial coating satisfies the requirements of the aforementioned standard ISO 22196 or JIS Z 2801 and eliminates in testing at least 95% of bacteria used in the test. In the topmost paint film is gain incorporated silver in such a way that the amount of silver is 0,001-0,6% by weight, preferably 0,003-0,3% by weight, calculated from the lacquer coating's dry weight. The topmost lacquer layer, when dry, has preferably a thickness of 30-40 µm.

The tabletop's coating may also be a metal coating similar to that illustrated earlier in fig. 3.

The table legs have been rendered antimicrobial by varnishing the same with a furniture lacquer 1-3 times and by incorporating in the topmost lacquer film bonded-to-carrier silver in such a way that the amount of silver is 0,001-0,6% by weight, preferably 0,003-0,3% by weight, calculated from the lacquer coating's dry weight.

The customer chair 1 has also its chair legs 15 constructed of solid wood which has been coated 1-3 times with a furniture lacquer and the topmost lacquer layer has been supplemented with bonded-to-carrier silver in such an amount that the antimicrobial coating thereof satisfies the requirements of the aforementioned standard ISO 22196 or JIS Z 2801 accordingly and eliminates at least 95% of bacteria used in the test.

An antimicrobial lacquer coating 6; 62 for the table legs and the legs of a customer chair is also in this case attained by supplementing the topmost lacquer layer with bonded-to-carrier silver in the form of being bonded to silver phosphate glass, as silver chloride bonded to titanium dioxide, or bonded to zeolite. The general formula of silver phosphate glass is Ca₃₀Na20₋ₓP₅₀Agₓ, wherein X=0,1-10, preferably 0,5-5. In the topmost paint film is incorporated silver in such a way that the amount of silver is 0,001-0,6% by weight, preferably 0,003-0,3% by weight, calculated from the lacquer coating's dry weight. The topmost lacquer layer, when dry, has preferably a thickness of 30-40 µm.

In the first fixture assembly 8; 81, the selection of a general structure and coatings for the office chairs 2; 2¹ and 2; 2² has been conducted the same way as described earlier for the office chairs of figs. 2A and 5 with the difference that the office chairs 2; 2¹ and 2; 2² placed at the customer service desk 5 in the fixture assembly 8; 82 are not equipped with armrests. The office chair's wood-frame seat panel 20 has its underside here provided with a metal-constructed adjustment leg 23, which is not considered a contact surface.

The seat panel 20 has its topside and side edges upholstered with textile, said textile upholstery 20a having an antimicrobial treatment. To the wood-frame seat panel 20 is connected a back support 21, which is made up of a backrest 21. The backrest 21 is provided with a textile upholstery 21a, 66, which has an antimicrobial treatment. The textile upholstery 21a, 66 is a fabric upholstery, which has been treated with microbicidal silver or isothiazolidine compounds or organofunctional silane, cf. the description of fig. 7B. Likewise, the wood-frame seat panel 20 has a neck support in connection therewith upholstered in its entirety with an antimicrobial textile upholstery 22a, 66 similar to that used for the backrest.

The reception desk 5 comprises a base 55, upon which rests a plate-like worktop 50 constructed predominantly from wood material. The worktop 50 in turn comprises an upturned worktop cover 50a and a worktop underside, said underside being directly adjoined by the wood material-constructed base 55 directed downward from the worktop. The base 55 has a wooden surface which can be coated with a plastic laminate or a plastic film. All surfaces of the base 55 are not generally regarded as contact surfaces, but just a front part of the base which is directed towards the customer. This part of the base is generally perceived as a contact surface and its plastic laminate coating (melamine resin-based) is rendered antimicrobial as observed in connection with fig. 7C.

The worktop 50 has its surface proximal to the cover 50a provided with an antimicrobial coating, which can be a paint surface, a plastic laminate coating, or a plastic film. Such an antimicrobial coating has been tested in accordance with ISO 22196 or JIS Z 2801, and it eliminates at least 95% of the selected bacteria used in the test.

The various coatings used for the cover 50a, i.e. the topside, of the worktop 50 are both structurally and in terms of the antimicrobial properties thereof similar to those already examined earlier in the case of a tabletop coating. Thus, the worktop 50 can be provided with a metal coating which is similar to that already described for the customer table depicted in fig. 3: if the worktop 50 has thereon a metal coating, it will cover either the entire worktop or just a part thereof and it is manufactured from antimicrobial brass or from a copper alloy with at least 60% copper. The antimicrobial brass coating and the antimicrobial copper alloy coating are required to fulfill the standards of the aforementioned EPA test protocol.

The worktop 50 has its vertical edges 53 provided with a polymer rim, which can be an edge strip or edge casting, the manufacturing thereof in a manner to render the same antimicrobial having been already described above. Hence, in case the polymer rim is a polyester-based edge strip 33d, the discussed edge strip will be rendered antimicrobial in such a way that the edge strip-forming polyester resin is supplemented, in the edge strip manufacturing process, with bonded-to-carrier silver in such an amount that the edge strip, whose thickness is 0,5-4 mm, contains silver 0,001-0,6% by weight calculated from the weight of polyester resin used for making the edge strip. Such an antimicrobial coating must again be tested according to ISO 22196 or JIS Z 2801 and is required to eliminate at least 95% of bacteria used in the test.

The polymer rim could also be a polyurethane-constructed edge casting, having a thickness of 1-5 mm, and into the edge casting is during the course of molding admixed bonded-to-carrier silver 0,001-0,6% by weight calculated from the weight of polyurethane resin used for making the edge casting.

In the event that the worktop 50 has its cover coated with a plastic laminate, preferably a melamine laminate, the latter is provided with an antimicrobial silver compound in a manner similar to that described more closely in fig. 7C. Hence, it is a melamine laminate 641 which makes up a laminate coating for the wood material-constructed reception desk 5. Regarding the general manufacturing technique for a plastic laminate 64, reference is here made to per se known prior art, such as Koponen, H 1991, Puutuotteiden jalostus ja kehitys (Refinement and development of wood products) 538, Otatieto Oy, Espoo. The plastic laminate 64 can be rendered antimicrobial in various ways as described in fig. 7C. However, the amount of antimicrobial silver is in all treatments 0,001-0,6% by weight, nevertheless calculated only for silver-treated films. Preferably, the silver is added in a bonded-to-carrier form, i.e. either in the form of silver phosphate glass, titanium dioxide-bonded silver chloride, or zeolite, into the film-forming resin, such as melamine resin, as the paper is impregnated with resin. In a preferred embodiment of the invention, silver was added into a plastic worktop laminate in the form of silver phosphate glass. The general formula of silver phosphate glass was Ca₃₀Na20₋ₓP₅₀Agₓ, wherein X=0,1-10, preferably 0,5-5. The thereby produced, silver phosphate glass-treated plastic laminate 64 can be used as a laminate coating in the laminate coating on the topside 50a of another worktop 50. The customer service desk 5 has its undersurface usually treated with silver phosphate glass only over its upper side, i.e. its service side. The other side, i.e. the worktop's underside adjoining the base 55, is usually left without antimicrobial treatment.

The worktop 50a may also be coated with a thin veneering of oak, beech, ash, birch and the like and the veneer can be surface-treated with paint or lacquer in a manner similar to that described more accurately in connection of figs. 7D-7E.

Hence, the wood veneer overlay is covered with a wood paint coating, especially a furniture lacquer coating with 1-2 lacquer layers, each paint film having a dry thickness of 20-40 µm. The wood paint coating has its topmost lacquer layer treated with an antimicrobial silver compound, such as silver phosphate glass, as presented in more detail in figs. 7D-7E and in the description related thereto. The amount of microbicidal silver in the lacquer coating is 0,001-0,6% by weight, preferably 0,003-0,3% by weight, calculated from the lacquer film's dry weight.

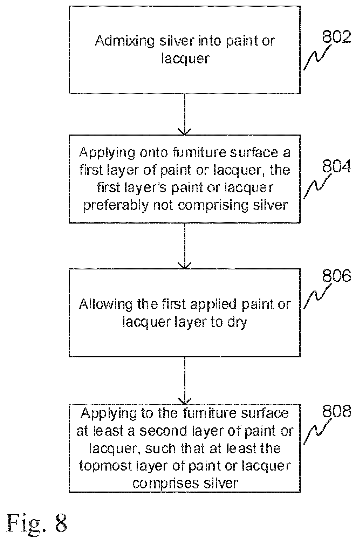

Fig. 8 presents steps for a method according to one embodiment of the invention, said method comprising establishing an antimicrobial furniture coating. Step 802 comprises admixing silver into paint or lacquer. The silver is admixed into paint or lacquer in situ, i.e. essentially a moment before applying such a paint or lacquer. Step 804 comprises applying a first layer of paint of lacquer on a furniture surface, whereby the paint or lacquer of the first layer preferably does not comprise silver. Step 806 comprises allowing the first applied paint or lacquer layer to dry. If the paint or lacquer of the first layer does not contain silver, the method steps 804 and/or 806 may also be conducted prior to step 802. Step 808 comprises applying onto the furniture surface at least one (second) layer of paint or lacquer, whereby at least the topmost applied layer of paint or lacquer comprises silver, the silver having been admixed in situ in step 802.

In one embodiment of the invention, step 804 may comprise applying a first layer of paint or lacquer, whereby also the first layer of paint or lacquer comprises silver.

### List of reference numerals

- 1: Chair, multiple legs
- 1¹-1⁴: group of customer chairs
- 10: seat panel of the chair
- 10a: textile upholstery
- 10a1,10a2, 10a3, 10a4: various textile upholsteries
- 10b: wood veneer overlay
- 10c: plastic laminate coating
- 10c1: melamine resin
- 10c2: polyester resin
- 10d: paint surface
- 10d1: lacquer coating
- 10d2: wood paint surface
- 10d3: powder paint surface
- 105: edge, rim of the seat panel
- 105d: wood paint surface
- 10e: wooden surface
- 11: back support
- 110: wood-constructed backrest support frame
- 112: metal-constructed backrest support frame
- 113: backrest
- 11a: textile upholstery
- 11b: wood veneer overlay
- 11c: plastic laminate coating
- 11d: paint surface
- 11d1: lacquer coating
- 11d2: (wood) paint surface
- 11d3: powder paint surface
- 115: edge, rim of the backrest
- 115d: paint surface
- 13: chair leg, made of metal
- 130: chair legs, made of metal
- 13d: paint surface
- 13d3: powder paint surface
- 14: armrest coupled to the chair leg
- 14a: leg member
- 14b: seat member
- 14c: armrest member
- 15: chair leg, made of wood
- 150: wooden chair legs
- 15d: wood paint surface
- 16: combined chair leg and armrest, made of wood
- 16a: armrest member
- 16b: leg member
- 17: wooden armrest
- 17d: wood paint surface
- 2: office chair, leg post
- 20: seat panel of the office chair
- 20a: textile upholstery
- 21: back support, backrest
- 21a: textile upholstery
- 22: neck support
- 22a: textile upholstery
- 23: adjustment leg
- 27: armrest
- 27a: support pad
- 27b: support arm
- 28: base
- 29: adjusters
- 3: table
- 30: tabletop, metal surface
- 30a: topside of the tabletop
- 301: metal coating
- 30b: vertical edge of the tabletop
- 30d: polymer rim
- 30e: edge strip
- 30f: edge casting
- 31: tabletop, wooden surface
- 31a: topside of the tabletop
- 310a: paint surface
- 310b: wood veneer overlay
- 310c: plastic laminate coating
- 310d: plastic film
- 33: vertical edge of the tabletop
- 33a: paint surface, paint surface
- 33d: polymer rim
- 33e: edge strip
- 33f: edge casting
- 31b: underside of the tabletop
- 320a: paint surface
- 320b: wood veneer overlay
- 320c: plastic laminate coating
- 310d: plastic film
- 34: table leg, made of wood
- 34a: leg post
- 34b: edge leg
- 35: table leg, made of metal
- 35a: leg post
- 35b: edge leg
- 35c: leg equipped with adjustment mechanism
- 4: keeper
- 41: cabinet
- 41a: door
- 41b: handle
- 41c: top
- 5: desk
- 50: worktop
- 50a: cover
- 53: vertical edge
- 55: base
- 6: antimicrobially treated material
- 60: metal surface
- 61: paint surface
- 61a: powder paint surface
- 61b: wood paint surface
- 62: lacquer coating
- 62¹, 62²: layers/films of the lacquer coating
- 63: polymer rim
- 64: plastic laminate
- 64¹..64⁶: films of the plastic laminate
- 641: melamine laminate
- 64a: surface film
- 64b: decorative paper
- 64c: base paper
- 65: plastic film
- 65a: melamine film, self-adhesive
- 66: textile upholstery
- 66a: silver bonded to polyamide fibers
- 66b: silane derivative
- 66c: isothiazolidine
- 67: injection molded component
- 68: brass surface
- 69: copper surface
- 7: sofa
- 8: Fixture assembly
- 81,82,82: fixture assemblies
- 9: Group of chairs
- 91: row of chairs, line of chairs
- 92: pair of chairs

## Claims

1. An antimicrobial furniture coating, having an antimicrobial paint surface said paint surface comprising one or more paint or lacquer layers, wherein the dry paint surface has a total thickness of 10-150 µm, preferably 30-100 µm, and at least the topmost lacquer or paint layers of the paint surface contain silver (Ag), and the amount of silver is 0,001-0,6% by weight, preferably 0,003-0,3% by weight, calculated from the coating's dry weight, **characterized in that** the coating has been produced by applying a paint surface (310a, 61) onto the furniture surface and **in that** the silver is in a substantially homogeneously distributed form, such that the coating comprises silver 0,001-30,0 µg/cm², preferably 0,03-20 µg/cm², in any selected cm² area, and further **in that** the silver has been added in the form of silver which is bonded directly or indirectly to a carrier compound, such as titanium dioxide, phosphate glass, or zeolite.

2. A coating according to any of the preceding claims, **characterized in that** the paint in a silver-comprising paint or lacquer layer is mixed in situ, whereby the silver is added into and mixed with the paint or lacquer essentially a moment before the paint coating is applied, not more than 30 min before the paint coating is applied, preferably not more than 10 min before the paint surface is applied, whereby the silver is present in the paint or lacquer in a substantially homogeneously distributed form, such that the paint or lacquer preferably has silver 10-200 µg/l, preferably 20-150 µg/l, in every liter.

3. A coating according to any of the preceding claims, **characterized in that** the paint surface comprises at least two paint or lacquer layers and it is predominantly only the topmost lacquer or paint layer which is provided with silver by applying first at least one lacquer or paint layer and by thereafter applying on top of said at least one lacquer or paint layer the silver-comprising topmost paint or lacquer layer, whereby the amount of silver is 0,001-0,6% by weight, preferably 0,003-0,3% by weight, calculated from the coating's dry weight.

4. A coating according to any of the preceding claims, **characterized in that** each paint or lacquer layer has a wet thickness of about 100 µm, whereby its dry thickness is about 10-60 µm.

5. A coating according to any of the preceding claims, **characterized in that** the silver has been added in the form of silver chloride which is bonded to titanium dioxide or wherein the silver has been added in the form of silver phosphate glass whose general formula is Ca₃₀Na₂₀₋ₓP₅₀Agₓ), wherein x=0,1-10, preferably x=0,5-5.

6. A coating according to any of the preceding claims, **characterized in that** the paint surface comprises a paint, which has a dry matter content of 30-60% and which comprises a binder selected from the group of PVA, copolymer, styrene acrylate or acrylate, and/or the paint surface comprises a lacquer, which has a dry matter content of 20-40% and which comprises a binder selected from the group of acrylate and alkyd.

7. A piece of furniture, **characterized in that** the piece of furniture has at least one selected contact surface thereof provided with a coating according to any of the preceding claims.

8. A piece of furniture according to claim 7, wherein the piece of furniture is a table (3) with a wooden tabletop (31), said tabletop (30, 31) comprising an upturned topside of the tabletop and a downward-directed underside of the tabletop,
the wooden(31) tabletop having its topside (31a) provided with a coating selected from the group, including
a paint surface (310a) and
a wood veneer overlay (310b);
and the wooden tabletop (31) having its underside (31b) provided with a coating selected from the group, including
a paint surface (320a),
a wood veneer overlay (320b);
and the wooden tabletop (31) having at least one vertical edge (33) thereof provided with a paint coating (33a);
and the wooden tabletop (30, 31) having its underside adjoined by
either a wooden leg post (34a) or a metal leg post (35a), which has a paint coating or
several wooden edge posts (34b) or several metal edge posts (35b), which have a paint surface;
**characterized in that** the at least one selected contact surface comprises:
A) a topside (A11 or A21) of the tabletop (30, 31) or vertical edges (30b, 33) (A12, A22) of the tabletop, whereby the coating of the wooden tabletop's (31) topside (31a) is
a paint surface (310a, 61) comprising one or more paint or lacquer layers, said paint surface having a total thickness of 10-120 µm preferably 30-100 µm, and at least one lacquer or paint layer contains silver (Ag) in such a way that the amount of silver is 0,001-0,6% by weight, preferably 0,001-0,3% by weight, calculated from the paint surface's dry weight, or
a wood veneer overlay (310b), on top of which is a paint surface (61) with one or more paint or lacquer layers, said paint surface having a total thickness of 10-120 µm, preferably 30-100 µm, and at least one of its lacquer or paint layers contains silver (Ag) in such a way that the amount of silver is 0,001-0,6% by weight, preferably 0,003-0,3% by weight, calculated from the paint surface's dry weight, or
A22) a surface of at least one vertical edge of said wooden tabletop (31), said coating being
a paint surface (33a, 61) comprising one or more lacquer or paint layers, said paint surface having a total thickness of 10-120 µm, preferably 30-100 µm, and at least one of its lacquer or paint layers contains silver (Ag) in such a way that the amount of silver is 0,001-0,6% by weight, preferably 0,003-0,3%by weight, calculated from the paint surface's dry weight.

9. A piece of furniture according to claim 8, **characterized in that** the table's (3) tabletop (30, 31) or the desk's (5) worktop (50) has a polymer rim (63) of its vertical edge manufactured from thermosetting plastics, such as polyurethane, by casting, whereby the polymer rim-forming resin has been supplemented with silver compounds in such an amount that the resulting polymer rim (63), whose thickness is 0,5-5 mm, contains silver 0,001-0,6% by weight, preferably 0,003-0,3% by weight, calculated from the weight of resin contained in said polymer rim (63), wherein preferably the edge strip is manufactured from polyester, whereby the edge strip-forming polyester has been supplemented, in the edge strip manufacturing process, with a silver compound in such an amount that the edge strip, whose thickness is 0,5-4 mm, comprises silver 0,001-0,6% by weight, preferably 0,003-0,3% by weight, calculated from the weight of resin contained in the edge strip.

10. A piece of furniture according to claim 8, **characterized in that** the wooden tabletop (30) has its topside and also its underside provided with adhesive wood veneer whose thickness is 0,6-4 mm, preferably 0,6-1,5 mm, whereby the wood veneer layer of the tabletop's cover is provided with a paint or lacquer coating which has a total film thickness of 10-100 µm, preferably 30-100 µm, and said topmost layer of the paint or lacquer coating having been supplemented with metallic silver and the amount of silver is 0,001-0,6% by weight, preferably 0,003-0,3% by weight, calculated from the paint or lacquer coating's dry weight, wherein the wood veneer layer is preferably further provided with a multilayer lacquer coating whose topmost lacquer layer, which, when dry, has a layer thickness of 10-100 µm, contains metallic silver, and the amount of silver is 0,001-0,6% by weight, preferably 0,003-0,3% by weight, calculated from the lacquer coating's dry weight, further wherein optionally only a part of the topmost veneer layer of the tabletop's undersurface is provided with a paint or lacquer layer into which has been added silver 0,001-0,6% by weight, preferably 0,003-0,3% by weight, calculated from the silver-treated paint or lacquer layer's dry weight.

11. A piece of furniture according to claim 7, wherein the piece of furniture is a chair (1, 2), having a wood-framed seat panel (10, 20) whose topside is provided with a coating selected from a group, including:
a wood veneer overlay (10b) and
and a paint surface (10d);
and whereby said wood-framed seat panel (10, 20) is adjoined by a back support (11, 21) directed upward from the seat panel (10, 20) and consisting either of a backrest (113, 21) or of a wooden, plastic or metal support frame (110, 112) with the wood-surfaced backrest (113) abutted thereon, the backrest (113, 21) being provided with a coating selected from a group, including:
a wood veneer overlay (11b) and
a paint surface (11d)
and wherein the possible wooden, plastic or metal support frame (110, 112) of the chair's back support (11) is provided with a paint coating (11d);
and said wood-framed seat panel (10, 20) of the chair is adjoined by one or more downward-directed chair legs (15, 13), which is/are coupled to the seat panel's underside and which is/are either wooden chair legs (15) that is/are provided with a wood paint coating (15d) or metal chair legs (13) that is/are provided with a powder paint coating (13d; 13d3);
**characterized in that** at least one selected (B) contact surface of the chair (1, 2) comprises a topside (B1) of the seat panel (10, 20) and/or the back support (11, 21) (B2), whereby
(B1) the seat panel (10, 20) has an antimicrobial coating for its topside selected from a group, said group including:
a wood veneer overlay (10b), on top of which is a paint surface (10d, 61) with one or more paint or lacquer layers, said paint surface having a total thickness of 10-120 µm, preferably 30-100 µm, and at least one of its lacquer or paint layers, such as its topmost lacquer or paint layer, contains silver (Ag) and the amount of silver is 0,001-0,6% by weight, preferably 0,003-0,3% by weight, calculated from the coating's dry weight, or
a paint surface (10d, 61) comprising one or more paint or lacquer layers, said paint surface having a total thickness of 20-120 µm preferably 30-100 µm, and at least one of its lacquer or paint layers, especially its topmost lacquer or paint layer, contains silver (Ag) and the amount of silver is 0,001-0,6% by weight, preferably 0,003-0,3% by weight, calculated from the paint surface's dry weight, or
(B2) the coating present on the backrest (113, 21) of the chair's back support (11, 21) has been treated antimicrobially as follows:
on top of the wood veneer overlay (11b) is a paint surface (11d, 61) with one or more paint or lacquer layers, said paint surface having a total thickness of 10-120 µm, preferably 30-100 µm, and at least one of its lacquer or paint layers contains silver (Ag) and the amount of silver is 0,001-0,6% by weight, preferably 0,003-0,3% by weight, calculated from the paint surface's dry weight, or
the coating is a paint surface (11d, 61) comprising one or more paint or lacquer layers, said paint surface having a total thickness of 10-120 µm, preferably 30-100 µm, and at least one of its lacquer or paint layers contains silver (Ag) and the amount of silver is 0,001-0,6% by weight, preferably 0,003-0,3% by weight, calculated from the coating's dry weight, or
the possible wooden, plastic or metal support frame (110, 112) of the chair's back support (11) is provided with a paint coating (11d) comprising one or more paint or lacquer layers, said paint surface having a total thickness of 10-120 µm, preferably 30-100 µm, and at least one of its lacquer or paint layers contains silver (Ag) and the amount of silver is 0,001-0,6% by weight, preferably 0,003-0,3% by weight, calculated from the coating's dry weight.

12. A method for producing an antimicrobial furniture coating, said coating having an antimicrobial paint surface which comprises one or more paint or lacquer layers, said method comprising
- admixing silver (Ag) into the paint or lacquer,
- applying one or more layers of paint or lacquer onto a furniture surface,
**characterized in that** the method comprises
- admixing silver into the paint or lacquer in situ, i.e. essentially a moment before application, such that, after the mixing and application, at least the topmost lacquer or paint layer contains silver, and the amount of silver is 0,001-0,6% by weight, preferably 0,003-0,3% by weight, calculated from the coating's dry weight, wherein the silver has been added in the form of silver which is bonded directly or indirectly to a carrier compound, such as titanium dioxide, phosphate glass, or zeolite.

13. A method according to claim 12, wherein silver is admixed into paint or lacquer in such a ratio that the paint or lacquer has a silver content which is substantially homogeneous in such a way that the paint or lacquer contains silver 10-200 µg/l, preferably 20-150 µg/l, in every liter.

14. A method according to claim 12 or 13, wherein silver is admixed into paint or lacquer in such a ratio that, when one or more applied paint layers have dried, the coating comprises silver in a substantially homogeneously distributed form, such that any selected square centimeter size area of coating comprises silver within the selected range of 0,001-30 µg/cm², preferably 0,03-20 µg/cm².

15. A piece of furniture, which includes an antimicrobial coating produced by means of the method according to claim 12.
